(19) Europäisches Patentamt / European Patent Office / Office européen des brevets

(11) **EP 4 556 946 B1**

(12) **EUROPEAN PATENT SPECIFICATION**


(45) Date of publication and mention of the grant of the patent:
**27.05.2026 Bulletin 2026/22**

(21) Application number: **23210774.8**

(22) Date of filing: **17.11.2023**

(51) International Patent Classification (IPC):
***G01S 7/48*** (2006.01) ***G01S 7/481*** (2006.01)
***G01S 17/42*** (2006.01) ***G01S 17/86*** (2020.01)
***G01S 17/87*** (2020.01) ***G01S 17/89*** (2020.01)

(52) Cooperative Patent Classification (CPC):
**G01S 17/89; G01S 7/4808; G01S 7/4815; G01S 17/42; G01S 17/86; G01S 17/87**


(54) **A SYSTEM FOR OPERATING IN A MARITIME ENVIRONMENT**

SYSTEM ZUM BETRIEB IN EINER MARITIMEN UMGEBUNG

SYSTÈME POUR FONCTIONNER DANS UN ENVIRONNEMENT MARITIME


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**21.05.2025 Bulletin 2025/21**



(73) Proprietors:
- **Ladar Limited**
  **PC: 2640 the Valley (AI)**
- **O.M. Offshore Monitoring Limited**
  **3071 Limassol, Cyprus 4102 (CY)**

(72) Inventors:
- **DOKKEN, Sverre Thune**
  **98000 Monte Carlo (MC)**
- **HJELMSTAD, Jens Fredrik**
  **2000 Lillestrom (NO)**
- **GRINDEVOLL, Jorgen**
  **Casa 122, Sabaneta (CO)**
- **QAZI, Waqas Ahmed**
  **Rawalpindi, Punjab (PK)**
- **HJELMSTAD, Magnar Fredrik Cheah**
  **2003 Lillestrom (NO)**

(74) Representative: **Patentship Patentanwaltsgesellschaft mbH**
**Paul-Gerhardt-Allee 50**
**81245 München (DE)**



(56) References cited:
**WO-A1-2021/030477** **US-A1- 2016 266 246**
**US-A1- 2018 329 061** **US-A1- 2021 019 521**
**US-A1- 2022 351 523** **US-A1- 2023 068 036**
**US-A1- 2023 215 164**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 4 556 946 B1

## Description

### TECHNICAL FIELD

The present invention relates to the field of operating a vessel in a maritime environment, in particular based on sensor data.

### BACKGROUND

In a maritime environment, a vessel is usually equipped with one or more sensors for detecting objects in the maritime environment, such as further vessels or buoys. In order to prevent a collision between the vessel and the objects there is a constant need for improved sensors and improved processing of sensor data of the sensors.

US 2016/266246 A1 discloses a sensor unit of a system for monitoring a maritime environment.

US 2018/329061 A1 discloses a spinning lidar unit with micro-optics aligned behind a stationary window.

WO 2021/030477 A1 discloses support structure mounting sensing devices for sensing port operations.

US 2023/068036 A1 discloses a method and device for situation awareness.

US 2022/351523 A1 discloses a method and device for monitoring port and ship in consideration of sea level.

US 2021/019521 A1 discloses a method and device for situation awareness.

US 2023/215164 A1 discloses radar and colocated camera systems and methods.

### SUMMARY

It is an object of the present invention to provide an improved system for operating in a maritime environment.

This object is achieved by the features of the independent claims. Further implementation forms are apparent from the dependent claims, the description and the figures.

According to a first aspect, the invention relates to a system for operating in a maritime environment with a vessel, the vessel comprising a sensor unit. The sensor unit comprises a first plurality of laser transmitters, each laser transmitter of the first plurality of laser transmitters being configured to simultaneously transmit a sensing laser pulse towards a common azimuth angle and at different first elevation angles of a predefined elevation angle range. The sensor unit further comprises a laser detection unit, wherein the laser detection unit comprises a second plurality of detectors. Detectors of the second plurality of detectors are configured to detect reflected laser pulse originating from reflections of the sensing laser pulses on at least one object in the maritime environment at the common azimuth angle and at different second elevation angles of the predefined elevation angle range. The sensor unit further comprises at least one camera. The vessel further comprises a processor, configured to receive sensor signals from each of the detectors, to receive camera signals from the at least one camera, and to determine a characteristic of the at least one object based on the received sensor signals and the received camera signals.

The detectors may be light detection and ranging (lidar) detectors. The alignment and orientation of the sensing laser pulses may be set to provide overlap with the laser detector sensor from some meters or some 10 m distance only to infinity to remove effect of light spillover in presence of fog or hydrometeors. The sensor unit may be connected to the processor.

In an embodiment, the predefined elevation angle range ranges from 2° to 20°, in particular is 5°, and/or a zooming function of the sensor unit allows the elevation angle range to be changed.

In an embodiment, angles of the different first elevation angles in the predefined elevation angle range are equidistantly distributed, and/or the first plurality of laser transmitters entirely covers a sensing area defined by the predefined elevation angle range for sensing the at least one object.

In an embodiment, a first number of the first plurality of laser transmitters of the sensor unit is smaller than a second number of the second plurality of detectors of the laser detection unit of the sensor unit, in particular the first number is half of the second number.

For example, the sensor unit may comprise 8 laser transmitters and the laser detection unit of the sensor unit may comprise 16 detectors.

In an embodiment, the at least one camera comprises a Red Green Blue, RGB, camera for detecting the visual light wave spectrum and an infrared camera for detecting the infrared light wave spectrum. Detection areas of the RGB camera and the infrared camera may cover the different first elevation angles of the first plurality of laser transmitters. The processor may be configured to determine the characteristic of the at least one object based on the received sensor signals from the detectors and based on the camera signals received from the RGB camera and the infrared camera.

Thus, the at least one camera may comprise two cameras, each configured for a different spectrum of light. The detection areas of the RGB camera and the infrared camera may be bigger than the sensing area of the first plurality of laser transmitters. The detection areas of the RGB camera and the infrared camera may be different. For example, the RGB camera may have a detection area (also referred to as field of view, FOV) between 16x16 and 19x19 degrees, in particular of 18x18 degrees, and/or the infrared camera may have a detection area between 14x14 degrees and 16x16 degrees, in particular of 15x15 degrees with respect to the azimuth angle and the elevation angle.

In an embodiment, the infrared camera of the at least one camera is a thermal infrared camera. The thermal infrared camera may be configured to detect thermal infrared wavelengths emitted by the at least one object. The thermal infrared camera may be configured to detect the at least one object depending on the temperature of the at least one object with respect to an ambient environment of the maritime environment, i.e. may detect an object based on its temperature differential with respect to the maritime environment.

In an embodiment, the processor is configured to generate a three-dimensional point cloud based on the sensor signals from the detectors. The sensor unit may comprise position and orientation sensors configured to detect position and orientation information of the sensor unit. The processor may be configured to link the received camera signals from the at least one camera with the points of the three-dimensional point cloud based on the position and orientation information of the sensor unit in order to link the sensor signals with the camera signals.

In an embodiment, the orientation information of the sensor unit comprises yaw information, roll information, pitch information, heave information, sway information, surge information, and/or pointing direction information with respect to a magnetic and geographic reference of the sensor unit. The orientation information may be obtained from embedded MEMS gyros, accelerometers, magnetic sensor, and/or mechanical orientation data from the sensor unit, in particular a pedestal.

The position information may comprise a location of the sensor with respect to a reference frame, in particular latitude and longitude information. The position information may for example be provided by a GNSS (Global Navigation Satellite System) sensor such as a Global Positioning System (GPS) sensor of the sensor unit.

In an embodiment, the sensor unit is swivel-mounted along an azimuth direction on a sensor base. The processor may be configured to swivel the sensor unit in the azimuth direction between an adjustable swivel angle area, in particular with an adjustable swivel angle speed.

In an embodiment, the processor may be configured to swivel the sensor unit in the azimuth direction between an adjustable swivel angle area and simultaneously move the sensor head of the sensor unit in the elevation direction. For example, the processor may be configured to move the sensor head of the sensor unit in a diagonal between the azimuth and elevation planes or any other movement direction and/or movement pattern.

In an embodiment, the swivel is also mechanically controlled by the processor based on navigational data to provide stabilized orientation or compensate for vessel movement.

The processor is configured to alternately modulate the sensing laser pulses by a first binary pseudo-random coding sequence and a second binary pseudo-random coding sequence. The first binary pseudo-random coding sequence may comprise a predefined number of identical first subsequences. The second binary pseudo-random coding sequence may comprise the predefined number of identical second subsequences. The second subsequences may be different from the first subsequences set to obtain cancelling of false echoes appearing at different ranges.

In an embodiment, the processor is configured to demodulate the reflected laser pulse based on the sensor signals by correlating the sensor signals with a reference signal sequence. The reference signal sequence may be based on the first binary pseudo-random coding sequence and the second binary pseudo-random coding sequence.

In an embodiment, the characteristic of the at least one object comprises an object class, an object dimension, an object size, an object speed, an object heading, a Closest Point of Approach, CPA, a Time to Closest Point of Approach, TCPA, a Bow Crossing Range, BCR, and/or a Bow Crossing Time, BCT, of the at least one object.

In an embodiment, the processor is configured to implement a local neural network to detect the at least one object and to determine the characteristic of the at least one object. The processor may be configured to feed the sensor signals from the detectors and the camera signals from the at least one camera as inputs to the local neural network. The processor may be configured to extract the characteristic of the at least one object as an output of the local neural network.

In an embodiment, the inputs of the local neural network further comprise further sensor data from further sensors of the vessel, in particular data from an Automatic Identification System, AIS, receiver, and/or data from a radar of the vessel.

In an embodiment, the processor is configured to determine a condition of the maritime environment, in particular a weather condition and/or a lightning condition, and the processor is configured to weight the inputs of the local neural network based on the condition of the maritime environment. The processor may be configured to weight the inputs of the local neural network before these inputs are processed by the neural network.

In an embodiment, the vessel comprises a memory configured to store the sensor signals and the camera signals, in particular a subset associated with the at least one object, together with the determined characteristic of the at least one object in a data object. The vessel may comprise a communication interface configured to transmit the data object to a cloud server of the system configured to receive the data object. The cloud server may be configured to implement a global neural network, to update the global neural network based on the received data object and to transmit the global neural network to the vessel. The processor of the vessel may be configured to update the local neural network based on the received global neural network.

The memory may store all signals of the sensor unit, for example additionally further sensor data from auxiliary sensors for position and orientation of the sensor unit.

The further sensor data from the further sensors of the vessel, in particular data from an Automatic Identification System, AIS, receiver and/or data from a radar of the vessel, may also be stored in the data object. The cloud server may be configured to update the global neural network based on the sensor signals and the camera signals of the data object, in particular the subset of the sensor signals and the camera signals associated with the at least one object. Additionally, the cloud server may be configured to update the global neural network based on the further sensor data of the data object, in particular a subset of the further sensor data associated with the at least one object.

In an embodiment, the cloud server is configured to generate further data objects based on the data object. The further data objects may comprise generated further sensor signals different from the sensor signals of the data object and/or further camera signals different from the camera signals of the data object. The cloud server may be configured to update the global neural network based on the generated further data objects.

In an embodiment, the processor is configured to determine a hazard score based on the characteristic of the at least one object, wherein the hazard score indicates a threat level of a hazardous situation between the vessel and the at least one object. The processor may be configured to trigger an alarm mechanism of the vessel when the hazard score is above a predefined threshold.

The predefined threshold may be defined for a zone, in particular close zone, around the vessel. A further predefined threshold may be defined for a further zone, in particular distant zone, around the vessel. The processor may be configured to trigger the alarm mechanism of the vessel when the hazard score is above the further predefined threshold.

Additionally or alternatively, the hazard score may be based on the CPA of the vessel and the at least one object. The processor may be configured to trigger the alarm mechanism of the vessel when the CPA reaches a predefined CPA threshold.

Additionally or alternatively, the hazard score may be based on the TCPA of the vessel and the at least one object. The processor may be configured to trigger the alarm mechanism of the vessel when the TCPA reaches a predefined TCPA threshold.

The hazard score may be a weighted score based on the CPA of the vessel and the at least one object and the TCPA between the vessel and the at least one object.

The hazard score may be a weighted score based on the CPA of the vessel and the at least one object, the TCPA between the vessel and the at least one object in the zone, in particular close zone, around the vessel.

The hazard score may be a weighted score based on the CPA of the vessel and the at least one object, the TCPA between the vessel and the at least one object in the further zone, in particular distant zone, around the vessel.

In an embodiment, the vessel comprises a display for visualizing the maritime environment. The display may be configured to display the at least one object and the characteristic of the at least one object in a live visualization of the maritime environment. The live visualization may be switchable between a position display, in particular a plan-position indicator view, based on the sensor signals of the detectors and at least a video display, in particular a RGB display and an infrared display, based on the camera signals from the at least one camera.

The video display may be an Augmented Reality, AR, visualization. The hazard score may be visualized in the display, in particular in the AR visualization.

In an embodiment, the characteristic of the at least one object is visualized by a vector at a visualization of the at least one object on the display and/or at a visualization of the vessel on the display.

For example, the display may be configured to display the object class, an object dimension, an object size, an object speed, an object heading, a Closest Point of Approach, CPA, a Time to Closest Point of Approach, TCPA, a Bow Crossing Range, BCR, and/or a Bow Crossing Time, BCT, of the at least one object as required, for example based on the hazard score and/or a user selection.

In an embodiment, at least some laser transmitters of the first plurality of laser transmitters operate at a Near-Infrared-Region wavelength, in particular at 800nm to 2,500nm, more particular at 950 nm; and/or at least some laser transmitters of the first plurality of laser transmitters operate at a blue-green wavelength, in particular at 560 nm.

The NIR laser may follow Class 3/3R laser safety specification. The blue-green lasers can allow closer-range surface layer observations. For example, half of the laser transmitters 105 may be NIR lasers and the other half of the laser transmitters 105 may be blue-green lasers.

In an embodiment, each laser transmitter of the first plurality of laser transmitters comprises a cylindrical lens and covers the predefined elevation angle range, wherein he transmitters of the first plurality of transmitters are configured to fully overlap at a maximum range of the first plurality of laser transmitters.

In an embodiment, each laser transmitter of the first plurality of laser transmitters is horizontally offset from a vertical axis of the laser detection unit.

Thus, the system can have no sensitivity at short range, where no overlap between the laser pulses and the detector sensitivity pattern until a certain range exists to minimize effect of scattering from ambient environmental parameters such as rain and fog.

Further embodiments of the invention will be described with respect to the following figures, in which:

Fig. 1 shows a schematic diagram of a system according to an embodiment for operating in a maritime environment;

Fig. 2a and 2b show schematic diagrams of a sensor unit of a system according to an embodiment;

Fig. 2c shows a schematic diagram of a sensing area of a sensor unit of a system according to an embodiment;

Fig. 3a schematically shows a connection between a sensor unit and a processor of a system according to an embodiment;

Fig. 3b schematically shows a circuit board of a processor of a system according to an embodiment;

Fig. 4 shows a schematic diagram of a system architecture implemented by a processor of a system according to an embodiment;

Fig. 5 shows a schematic diagram of a machine learning process of a system according to an embodiment;

Fig. 6 shows a modulation scheme of laser transmitters of a system according to an embodiment; and

Fig. 7a-c schematically show orientations of a vessel of a system according to an embodiment in a maritime environment.

## DETAILED DESCRIPTION OF EMBODIMENTS

In the following description, reference is made to the accompanying figures, which form part of the disclosure, and which show, by way of illustration, specific aspects of embodiments of the invention or specific aspects in which embodiments of the invention may be used. It is understood that embodiments of the invention may be used in other aspects and comprise structural or logical changes not depicted in the figures. The following detailed description, therefore, is not to be taken in a limiting sense, and the scope of the invention is defined by the appended claims.

For instance, it is to be understood that a disclosure in connection with a described method may also hold true for a corresponding system configured to perform the method and vice versa. For example, if one or a plurality of specific method steps are described, a corresponding system may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific system is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Fig. 1 shows a schematic diagram of a system 100 according to an embodiment for operating in a maritime environment.

As schematically illustrated in Fig. 1 and described in more detail below, the system 100 comprises a vessel 101 with a sensor unit 103. The sensor unit 103 comprises a first plurality of laser transmitters 105, each laser transmitter of the plurality of laser transmitters 105 is configured to simultaneously transmit a sensing laser pulse towards a common azimuth angle and at different first elevation angles of a predefined elevation angle range.

The sensor unit 103 further comprises a laser detection unit 107. The laser detection unit 107 comprises a second plurality of detectors. Detectors of the second plurality of detectors are configured to detect reflected laser pulse originating from reflections of the sensing laser pulses on at least one object in the maritime environment at the common azimuth angle and at different second elevation angles of the predefined elevation angle range. The second plurality of detectors of the laser detection unit 107 may be Avalanche Photodiodes (APD).

The sensor unit 103 further comprises at least one camera 109a, 109b.

The vessel 101 further comprises a processor 111 configured to receive sensor signals from each of the detectors, to receive camera signals from the at least one camera 109a, 109b, and to determine a characteristic of the at least one object based on the received sensor signals and the received camera signals.

In an embodiment, some or all of the laser transmitters 105 may operate in the Near-Infrared-Region (NIR), in particular at 800nm to 2,500nm, more particular at 950 nm. The NIR laser may follow Class 3/3R laser safety specification.

In an embodiment, some or all of the laser transmitters 105 may be blue-green lasers, in particular operating at 560 nm, for closer-range surface layer observations.

For example, half of the laser transmitters 105 may be NIR lasers and the other half of the laser transmitters 105 may be blue-green lasers.

Fig. 2a and 2b show schematic diagrams of the sensor unit 103 of the system 100 according to an embodiment. As schematically illustrated in Fig. 2a, the sensor unit 103 may comprise a sensor head 103a and a sensor base 103b. The sensor head 103a may be rotatable mounted on the sensor base 103b along an azimuth direction of the vessel 101. The sensor head 103a may be rotatable along an elevation direction of the vessel 101.

The rotation around the azimuth and along the elevation direction may be caused by a pan-tilt unit 110a,b. The pan-tilt unit 110a,b may provide up to 360 degrees panning for all azimuth coverage, and tilt adjustment within suitable angle range for close or medium range coverage. The panning functionality of the type-specific pan-tilt unit 110a,b allows for the system 100, in particular the sensor head 103a, to pan in the azimuth plane and the full data from the surroundings can be obtained in this manner by acquiring data at each configured time step of the lidar functioning. The range of panning may be adjustable, for examples at 120°, 180° or 360°. The speed of panning may be also adjustable.

Additionally, the panning functionality of the type-specific pan-tilt unit 110a,b may allow the system 100, in particular the sensor head 103a, to pan and tilt simultaneously, e.g. to move in a diagonal between the azimuth and elevation planes or any other movement direction and/or movement pattern.

The sensor head 103a comprises the laser transmitters 105, the laser detection unit 107 and the at least one camera 109a,b, in particular a Red Green Blue, RGB, camera (also further referred to as visual camera in the following) 109a and an infrared camera 109b.

The sensor head 103a may be compact, for example has a length, height and/or width below 30 cm. The sensor head may have a low weight, for example below 5 kg, and/or a low power consumption, for example below 50 W, by implementing advanced mechanics, compact electronics and power efficient components.

The sensor unit 103 may be mounted at various locations, for example a mast such as a rotative mast or a forward mast of the vessel 103. Moreover, the sensor unit 103 may be arranged in ports or on rigs.

As schematically illustrated in Fig. 2b, the laser transmitters 105 of the sensor unit 103 simultaneously emit the laser pulses 114 towards a common azimuth angle.

For example, the laser transmitters 105 may comprise 8 laser transmitters forming a vertical fan-blade of laser light, which the laser detection unit 107 may then subdivides by 2 into 16 vertical segments, each measuring a range to the at least one object individually. The APD detector elements of the laser detection unit 107 may be arranged in an equidistance distribution along a vertical line at the focal plane at the rear of a single large receiver optics, in particular a lens barrel, of the laser detection unit 107. In other words, they may share the same optics, but they may all look at slightly different angles through the single large receiver optics, in particular the lens barrel, of the laser detection unit 107.

The laser transmitters 105 and the laser detection unit 107 may form a multi-channel lidar 105, 107, with multiple transmitting laser diodes, i.e. laser transmitters 105, and two times the receivers, i.e. detectors. For example, 8 transmitting laser diodes and 16 receiver channels can be provided. As will be appreciated, less or more than 8 transmitting laser diodes can be provided and/or less or more than 16 receiver channels can be provided.

The multi-channel laser emitter diodes, i.e. the laser transmitters 105, may be set up in a circular configuration, but may be collimated, aligned and focused to create a vertical pattern in the range of interest, effectively becoming a vertical line or vertical sensing area 113 (shown in Fig. 2c) at the ranges-of-interest.

The lidar vertical field-of-view (FOV) spread may be preferably set at 5°. As will be appreciated, the lidar vertical FOV may be set to less or more than 5°.

This multi-channel lidar configuration with stacked channels in the vertical dimension can allow simultaneous measurement of targets at various ranges, detecting multiple target profiles at different ranges in the same line of view.

The sensor unit 103 may comprise a housing, in particular conforming the IP67 standard, for water and dust resistance.

Thus, as illustrated in Fig. 1, 2a and 2b, the system 100 can operate in the maritime environment based on the improved sensor unit 103 for providing improved sensor data for detecting the characteristic of the at least one object, which allows the vessel 101 to navigate with a reduced risk of collision.

Fig. 3a schematically shows a connection between the sensor unit 103 and the processor 111 of the system 100 according to an embodiment. As illustrated in Fig. 3a, an external junction box 115 with power and communication devices may be interposed between the sensor 103 and the processor 111. The external junction box 115 may provide communication links and/or power connections to the sensor 103, and in particular various further sensors of the vessel 101.

Fig. 3b schematically shows a circuit board of the processor 111 of the system 100 according to an embodiment.

As illustrated in Fig. 3b, the laser transmitters 105 may be individually controlled by laser drivers implemented on a FPGA 117 which is connected to the processor 111.

The FPGA 117 may further provide a connection of the laser detection unit 107 to the processor 111, and in particular a preprocessing of the data from the laser detection unit 107 for the processor 111.

As further illustrated in Fig. 3b, the at least one camera 109a,b may be connected via an USB 2/3-Link to the processor 111.

As further illustrated in Fig. 3b, the pan-tilt-unit 110a,b may be controlled by the processor 111 via respective motor drivers.

The sensor unit 103, in particular the sensor head 103a, may further comprise integrated sensors such as an inertial sensor (IMU), a magnetometer, a gyroscope and/or an accelerometer. Fig. 3b illustrates a IMU module 119 for the IMU sensor.

The sensor unit 103 may further comprise an embedded position sensor, for example a GNSS (Global Navigation Satellite System) sensor such as a Global Positioning System (GPS) sensor. The processor 111 may comprise a GNSS module 121 for the GNSS sensor.

The system 100 may be further configured to integrate data from a radar, an Automatic Identification System (AIS), a depth sounding or forward looking sonar, and metocean sensors such as waveriders or wind sensors, for example via PoE (Power over Ethernet) and/or USB (Universal Serial Bus) connections.

Fig. 3b further shows a power supply 123 for supplying the processor 111 and/or various components such as various sensors of the system 100 with power.

Fig. 4 shows a schematic diagram of a system architecture implemented by the processor 111 of the system 100 according to an embodiment. The system architecture may comprise a layered, modular design, where the specifics for different devices, IO (Input Output) protocols, UI (User Interface) technologies, and hardware platforms are supported in distinct functional modules operating in different layers, with their own features, interfaces, and protocols. At the highest level a service process may be interacting with attached devices, for example running on embedded Linux, and client applications running on Windows.

As shown in Fig. 4, the processor 111 may implement a first module 125 for firmware such as for VHSIC (Very High-Speed Integrated Circuit) Hardware Description Language (VDHL) for Field-Programmable Gate Arrays (FPGA) and embedding drivers, server or a motor control for the pan-tilt unit 110a,b, etc.

As further shown in Fig. 4, the processor 111 may implement a second module 127 for processing target detection, AI object detection, ranging and velocity processing, target projection in time, an alarms engine, etc.

As further shown in Fig. 4, the processor 111 may implement a third module 129 for interfacing with an operator console (also referred to as display) used for a Graphical User Interface (GUI) visualization with real-time updates, and/or for controlling sensors and actuators.

The first module 125 may be interacting with the second module 127 via a firmware Application Programming Interface (API) comprising protocols for data exchange. The second module 127 may be interacting with the third module 129 via an instrument API comprising protocols for data exchange.

The major components of the system architecture may be established in a strongly typed and fully compiled programming language such as C/C++ with minimal dependencies, while scientific programming languages such as Python may be used for some of the modules 125, 127, 129.

The processor 111 may be configured to transmit operational commands and receive data / telemetry through Ethernet and/or Wi-Fi hardware interfaces on the instrument, i.e. the sensor unit 103.

The processor 111 may implement frameworks and data communication protocols to efficiently communicate data in real-time to a Machine Learning (ML) framework, an Artificial Intelligence (AI) module and/or an inference engine performing an object detection and classification. The processed data streams along with the AI module outputs may then be communicated in real-time to the dynamic interactive GUI for display and visualization.

The processor 111 may ensure data acquisition and detection at various ranges and angles from the various sensors of the sensor unit 103, a proper streaming and storage of the data, and/or make sure that pixels and range bins for the at least one camera 109a,b and the lidar 105, 107 respectively are correctly specified in space and time.

The processor 111 may implement a signal target detection utilizing a target detection in noise, for example based on the Constant False Alarm Rate (CFAR) algorithm. The output of the CFAR-based target detector may be targets placed as a function of range in the horizontal plane around the vessel within the panning Field of View (FOV). Within individual-channel and cross-channel data aggregation procedures in the system a target tracking across various time instances and data captures may be ensured.

The processor 111 may be configured for a range and/or velocity measurement of the at least one object, a point of closest approach (PCA), a time of point of closest approach (TCPA), monitoring a guard zone or alarm zone, and/or configured to automatically trigger an alarm.

The sensor data of the sensor unit 103 may be automatically recorded following a detection of an event or incident and/or manually recorded, for example, following a user command of the system. The processor 111 may be configured to record data streaming both on-demand and automatically when a pre-specified hazard situation arises, and/or may be configured to playback recorded data both on-demand and automatically when a pre-specified hazard situation arises.

The operator console, in particular the GUI, may act as a user interface for navigation aids that may visualize the surrounding physical environment, i.e. the maritime environment, and may notify the operator (also referred to as user) about dangers and other events relevant to navigation. The operator console may interact with the rest of the system through the instrument API.

The operator console, i.e. display, may have a native version running as an OS-based application on an attached computer, such as a PC or laptop, and/or as a web-based version running on an internet browser on any platform connected to the system, such as a PC, a laptop, a smart phone, or a tablet.

The operator console, in particular the GUI, may display the processed data for each of the sensors as individual sensor visualization, for example processed data of the lidar sensors 105, 107 as a radar-like PPI (plan-position indicator view) showing the vessel 101 at the center of a polar diagram, with range contours and detected targets in real-time, along with other functionalities, visual camera 109a and thermal camera (also referred to as infrared camera) 109b streams, and also as a combined Augmented Reality (AR) view showing the detected objects and their relevant information, such as range, point of closest approach (PCA), time of point of closest approach (TCPA), target type as identified from the AI module, overlayed on an live video feed. All of these various views of the operator console may be cross-integrated and synchronized.

The AR view may ensure a real-time display and communication of the situational awareness around the vessel 101 and the results of the AI-based object detection and classification to the user/navigator, for example, on the bridge of the vessel 101, based on the data described in embodiments above and below.

The operator console, in particular the GUI, may be configured to ingest and display information of the vessel 101 such as Speed Over Ground (SOG) and Speed Through Water (STW) based on the sensor data of the sensor unit 103 and/or further sensors of the vessel 101. Such information, when combined with the information regarding the detected objects of interest, i.e. the at least one object, in the maritime environment of the vessel 101, may enable the calculation and display of the target-of-interest range and velocity based parameters such as Heading, Closest Point of Approach (CPA), Time to Closest Point of Approach (TCPA), Bow Crossing Range (BCR), and Bow Crossing Time (BCT) enabling the user/operator to assess the situation in real-time. The projections of parameters like CPA and BCR may be visualized for both the target and own vessel through a visual vector, adjustable in steps according to a specified time unit, e.g. minutes.

The operator console, in particular the GUI, may be configured to show the detection and tracking of multiple targets, i.e. the at least one object, simultaneously. The CPA and TCPA values for each target may be continuously evaluated in real-time to assess the potential for navigation hazards. A hazard risk ranking may be shown on the GUI, especially in the AR display widget for high risk levels (pre-defined). The operator console may generate alarms, such as visuals, notifications, pop-ups and/or sounds, for the operator/user, according to a user-specified setting of a hazard or guard zone around the vessel 101.

The AI module for object detection and data extraction may provide information about the detected target identity and behavior, such as vessel type, dimensions, size, range, speed, heading, CPA, TCPA, BCR, BCT, and others, and a hazard ranking module implemented by the processor 111 may assign a dynamic ranking on the hazard level. This could be based on various approaches, such as ranking with shortest CPA or smallest TCPA, or a weighted dimensionless combination of both. This hazard ranking may be updated in real-time on the GUI for the operator/user and may forms the basis of hazard notification alarms according to default or user-defined settings.

All data processing, object detection, and/or further processing, such as the hazard detection, of the processor 111 may be done on-board the vessel 101 in real-time as a self-contained system. The acquired datasets may be stored locally and then be communicated and synched when connection is available on the vessel 101, for example via satellite communication or terrestrial RF communication or other means, to an onshore-based central cloud repository, i.e. a cloud server, to be used for analysis, mariner training, and improvement of the machine learning algorithms. The information related to hazards in the marine environment may be reported to a central database for hazards and navigation dangers of the cloud server, indicating information such as time stamp, location, and type of hazards.

For further training of the machine learning model and improvement of the training set in an auto-improvement feedback system, the machine learning models may be continuously updated and upgraded as new training data comes in from the vessel 101, to allow for higher-quality classification of objects and obstacles as an interactive and dynamic development process. This may be an automated continuous feedback loop without the need for manual intervention. The system 100 may therefore work in a hybrid processing scheme where real-time data is processed onboard the vessel 101 and the cloud-based service of the cloud server is used for validation, calibration, and optimizing the object detection algorithm.

Fig. 5 shows a schematic diagram of a machine learning process of the system 100 according to an embodiment. The AI module for AI algorithms and machine learning patterns may be configured to detect and classify various objects in the maritime environment.

As illustrated by step 131 of Fig. 5, the training datasets for the multi-sensor combination of lidar 105, 107, visual camera 109a, and thermal camera 109b for the AI module may be gathered first using data simulations and then, as illustrated by step 133 of Fig. 5, from other existing sources of data (such as online repositories), and subsequently, as illustrated by step 135 of Fig. 5, using the sensors of the sensor unit 103.

As illustrated by step 137 of Fig. 5, the training datasets may be cleaned and prepared and augmented before being further processed.

The model training, illustrated by step 139 of Fig. 5, may be performed in cloud-based and/or HPC (high-performance computing) setups. This may comprise continuously and/or regularly updating and enhancing the trained model.

As already described above, the system 100 may provide interfaces and connections with other ship-based sensors, including but not limited to radar, AIS receiver, other data feeds related to situational awareness around the vessel 101. The fusion of these data streams can improve the data processing, accuracy of detection, and accuracy of parameter extraction such as range, speed and other target parameters. For all detections from the sensor unit 103, the radar and AIS data fusion may improve processing by decluttering the image and adding higher fidelity and accuracy to the detections by providing reference data. These data may be stored along with the system outputs of the system 100 and may be used for further enhancing the machine-learning-based object detection models in a continuous feedback loop, enabling the machine learning model to identify false detections. The AI model may be retrained in predetermined time intervals, reducing false positives and false negatives in the detection.

As illustrated by step 141 of Fig. 5, the trained model may then be deployed onboard the vessel 101 in the processor 111 for object detection and classification in real-time.

As illustrated by steps 143 and 145 of Fig. 5, the AI module may be set up to ingest and provide real-time object detection on the combination of the lidar sensor 105, 107, the visual camera 109a and the thermal camera 109b, and/or individually in case one sensor is not functional, for example, the visual camera in night-time. The simulated training datasets and other sources of training data may be constructed accordingly to represent the data streams from these multiple sensors and their various characteristics, for example, depth values in 3D space from multi-channel lidar 105, 107, visual RGB images from the visual camera 109a, thermal grey-scale images from the thermal camera 109b, resolutions, and ranges of detection.

The establishment of an accurate object detection and classification AI-based model may be achieved through testing, assessment, and comparison of different approaches and parameter settings through evaluation parameters used individually or in combination. These may comprise parameters and metrics such as F-score parameters, precision, recall, ROC (receiver operating characteristic curve), AUC (area under the ROC curve), etc.

The AI module and machine learning algorithms for object detection may be ensured to have suitable robustness and flexibility to provide accurate object detection and classification while catering to the conditions of low visibility and other difficult weather conditions, via the multi-sensor data streams. This may involve simulating and/or acquiring the training data in various conditions and scenarios, e.g. varying atmospheric conditions such as fog or rain, varying sea surface conditions such as wind, sea state, sea wave direction, and/or varying light conditions such as daylight, nighttime, various sun angles, and low visibility situations.

In any machine learning based object-detection project based on the machine learning approach, data collection and/or data generation may be critical factors in high-accuracy object-detection AI methods, and the data inputs may need to follow the principles of quantity, quality, and variability. Real-life data collection of data is often preferred, however, in many cases, this is not very feasible. For example, in the process of sensor development, lack of deployment in real environments and/or adverse conditions may be issues. A specific issue especially relevant to the domain of maritime applications may be that in most sailing situations, the data set may be general sparse and of low variability, the sample size of rare (but relevant or interesting) occurrences may very well be small, and it may take an enormity of different sailings over a long amount of time to collect enough data to cover all the major scenarios of interest.

Thus, as described above, the object detection model of the system 100 may be set up, trained, and deployed on a combination of Virtual Reality (VR) data simulations and annotations, real-life image and video data annotations, and annotations on the real data acquired from the sensor suite, i.e. the sensor unit 103. The inclusion of a wide variety of simulated datasets allows to produce a wide variety of cases and events which may be too rare or hazardous to be observed in real-life campaigns but can be safely and efficiently simulated, such as hazardous navigation conditions, imminent ship collisions or groundings, containers falling overboard, etc. The simulations allow to create a series of almost infinite datasets, which may be directly useful for training (without the need to sift through the data to find relevant data frames), becoming especially relevant for the maritime applications of the system 100, where a wide variety of object classes in different ambient conditions (including but not limited to sea state, time of day, lighting conditions, weather, visibility, etc.) may be meant to be detected, thus requiring huge quantities of data with high variance. Data simulations allow to continuously deploy variations and assess the performance of the object-detection framework, while discovering edge cases, which may then be simulated in the next data simulation iteration(s), in a continuous improvement loop.

Categories and/or classes for the maritime vessels and other objects may be simulated keeping into consideration the COLREG (International Regulations for Preventing Collisions at Sea) rules for shipping. These include fairway markings on buoys, and behavior of navigation lights, so that the object detection system may be trained on these and may be able to recognize traffic zone and/or guidance markings on buoys and/or navigation states of the vessel 101.

In more detail, the simulations may be set up through the use of 3D simulation engines to provide complete RGB-D (RGB + Depth) data as 3D data that may provide simulated cross-registered pixel intensity values and depth values at each pixel of interest in the image. The simulation set variation for a fixed scenario, variation in terms of ambient metocean and lighting conditions, may be implemented using 3D simulation software and Generative AI methods.

Advantageously, the semi-automated data simulations and automated data annotations with various statistical and machine learning approaches can be used to develop and deploy the object detection model of the system 100.

The co-registered multi-sensor data may be used in a feature level fusion which combines the RGB image from the visual camera 109a with its corresponding depth from lidar 105, 107 and the infrared image from the thermal (IR) camera 109b to produce a five-channel input towards the object detection model, a customization of the RGB-D approach. Thus, more information per input to the object detection model is provided, making object detection more robust and accurate as, for example, compared to using just RGB images. This is based on the multi-channel instrument set up such that all the sensors may have different capabilities and different advantages of detection at different ranges and using different underlying physical phenomena: the visual camera 109a may provide long and/or all ranges detection, the IR camera 109b may provide low light long range detection and the lidar 105, 107 may detect small and/or concealed targets and also provide range/velocity measurements.

The feature level fusion may be further optimized by assigning different weights to the data depending upon the ambient conditions, for example, less confidence on visual camera data during fog circumstances.

Thus, as illustrated in Fig. 4 and 5, the system 100 can operate in the maritime environment based on an improved AI model for detecting the characteristic of the at least one object, which allows the vessel 101 to navigate with a reduced risk of collision.

Fig. 6 shows a modulation scheme of the laser transmitters 105 of the system 100 according to an embodiment. As described above, an active sensor lidar part comprises at least a laser transmitter 105 (also referred to as Tx in the following) and a laser receiver (also referred to as Rx in the following), i.e. the laser detection unit 107. The laser transmitter 105 may output a train of laser pulses that travels to a distant target, i.e. the at least one object, where it is reflected backwards towards the laser receiver. The reflected pulse train may arrive at the laser receiver at a time delay corresponding to the round-trip distance to the target. The energy in each of the pulses in the pulse train may be very low and the individual pulses may not be detectable directly.

Therefore, a Tx-Rx time shift may be found by cross-correlating the transmitted and received pulse trains. This method is called Pseudo-Random Modulation (PRM) Lidar and differs from the more commonly used Pulsed Time-of-Flight Lidar, where a few short, high-intensity pulses are used and where the time delay is found by direct detection of each pulse. The advantages of the PRM Lidar are that general-purpose, low-cost laser diodes can be used and that the laser driving electronics can be made much simpler. The further use of multiple laser modules/apertures geometrically separated helps optimize laser radiation while ensuring eye safe operation.

The system 100 may uses a version of the Golay complementary pair modulation scheme in the PRM lidar Tx-Rx chain. In a PRM lidar, the individual pulses in the pulse train can be referred to as "chips", having a binary description of on (1) or off (0). The length of each chip in the sequence may determine the range resolution as

$$\Delta L = c \times \Delta t / 2$$

where c is the speed of light and division of 2 is done because the light goes back and forth within the chip time $\Delta t$. Generally, the chirp time may be on the scale of nanoseconds, and a corresponding resolution on the order of a few meters. In the system 100, the $\Delta t$ may be between 15-25 ns, and may be an adjustable parameter, which can be adjusted according to the system optimization requirement.

The maximum distance to be measured (L) may be equal to the individual chip length multiplied by the number of chips in the sequence (N):

$$L = \Delta L \times N$$

In the system 100, N may be set to 1024 giving a theoretical maximum range between 2304 and 3840 m.

In a conventional PRM lidar, a much longer sequence is typically used because this reduces the side lobe level (i.e. the chance for false detections). Long sequences may require more processing power and to keep the system power-optimized, a Golay complementary pair of sequences denoted A and B is used in the system 100. Complementary means that the peak of the correlation functions of A and B are in phase whereas all the side lobes are in antiphase. By alternately outputting sequence A and B, and then summing the resulting correlation functions, all side lobes can be removed, and only the correlation peak may be left.

As schematically illustrated in Fig. 6, the laser transmitter 105 (Tx) may alternate between the sequences A and B, each sequence being repeated 64 times before switching to the next. There may be no interrupts between the last chip of a sequence and the first chip of the following, i.e. no pause between the last chip of one sequence and the first chip of the following sequence.

The number of 64 repetitions may be chosen based on the requirement that the scene must be considered unchanged during a modulation cycle of 64×A + 64×B. With the chosen maximum value of Δt=25ns, N=1024 and 64+64=128 a cycle time of

$$\text{Tcycle} = \Delta t \times N \times 128 = 3.28\text{ms}$$

can be obtained thus fulfilling the requirement for a static scene within the cycle time.

The Rx channel may be sampled continuously. The sampling rate may have to be twice the chip rate, i.e 80 MHz.

For demodulation, the cross correlation may take place over 2N samples, correlated against a reference sequence that is a duplication of the modulation sequence due to the 2x sampling rate, for example, the reference sequence may be A1, A1, A2, A2, .....AN, AN.

The processor 111 may be configured to perform any of the following three demodulation schemes according to system requirements and optimization considerations.

In a first demodulation scheme, the processor 111 may implement an averaging and correlation approach. This scheme may average over 64 Rx sequences before cross-correlating the averaged sequences with the corresponding Tx sequence (A or B). In order to avoid cross-correlation terms (A×B) the first sequence (2N samples) may be excluded after switching from A to B and B to A, in effect averaging over 63 sequences instead of 64.

In a second demodulation scheme, the processor 111 may implement a correlation and averaging approach. This scheme cross-correlates each sequence of 2N samples with the corresponding Tx sequence before averaging the 63 cross-correlation functions, due to the exclusion of one full sequence (2N samples) after switching from A to B and B to A).

In a third demodulation scheme, the processor 111 may implement a Fourier transform. This scheme may be most computationally efficient yet may also have a more complex implementation than the first or second approach. The third demodulation scheme may be based on the correlation (convolution) in the time domain being equivalent to multiplication in the Fourier domain. The Fast Fourier Transformation (FFT) of the 2N Rx samples may be calculated and the result may be multiplied with the complex conjugate of the FFT of the reference sequence. An inverse FFT of this product may yield the cross-correlation function of the Tx and Rx sequences. Either the average over 63 sequences is calculated before the FFT, or the FFT of each sequence is calculated first and then the average the resulting 63 cross-correlation functions is calculated after.

For any of the above demodulation schemes, after obtaining the correlation functions of A and B individually, the two functions may be added, thus enhancing the main peak of the correlation functions and eliminating the side bands.

A full range detection cycle may be 64×A + 64×B and a new range value may be calculated at this interval (3.8ms). However, it is possible to obtain a new range value at twice this rate by calculating a new range value after 64×A + 64×B and the next as 64×B + 64×A. When the sensor head 103a is panned horizontally, this may increase the spatial resolution sidewise, but at the cost of twice the data rate.

Furthermore, as described above, the signal may be sampled at twice the chip rate, therefore the effective range resolution for a chip time corresponding to 25 ns may actually correspond to 12.5 ns, which would in the described example come out to be 1.875 m per range bin.

All Tx modules, i.e. the laser transmitters 105, may be modulated with the same modulation pattern, but since the detector elements of the laser detection unit 107 may be "looking" in different vertical directions, each element will receive the echo from different points in the scene.

Thus, as illustrated in Fig. 6, the system 100 can operate in the maritime environment based on the laser modulation for providing improved sensor data for detecting the characteristic of the at least one object, which allows the vessel 101 to navigate with a reduced risk of collision.

Fig. 7a-c schematically show orientations of the vessel 101 of the system 100 according to an embodiment in the maritime environment. Zone 147 of Fig. 7c illustrates the effect on the panning laser 'blade', i.e. the vertical sensing area 113, effective pointing direction, due to pitch and roll of the vessel 101.

The sensor suite, i.e. the sensor unit 103, may need single-chip position and angular sensor measurement devices to keep track of spatial movement and orientation of the instrument, i.e. the sensor head 103a, in terms of translation, rotation, heading and pointing direction. Thus, the system 100 may further comprise auxiliary sensors. A rotational velocity can be measured with a gyroscope, a rotational acceleration can be measured with an accelerometer, orientation and pointing direction can be measured through a magnetometer, these in all axes and degrees-of-freedom of motions. A location, translation, course over ground, and speed over ground can be measured via a GNSS receiver, and further detailed measurements can be obtained through various combinations of these auxiliary sensors.

An overall IMU chipset may measure and determine the instrument motion in the 6 degrees-of-freedom (rotation: yaw, roll, pitch; translation: heave, sway, surge), thus determining the instrument orientation as per an inertial reference frame. Translation may be measured via a full multi-satellite GNSS receiver with internal and/or external antenna, which also may be needed to keep track of the sensor position for data collection and analysis. The system 100 should need to keep track of all these intended and unintended motions of the sensor head 103a affected by the ship motions in all 6 degrees-of-freedom, most primarily in the form of pitch and roll of the vessel, as this movement may throw off the aim of the laser beams of the laser transmitters 105 considerably, especially at longer ranges.

This orientation awareness is crucial because of the need to map and store all range data into an internal software data structure. A single laser is by nature a point source, and in the case of the multi-channel system 100, may be acting like a vertical fan blade and/or curtain beam due to the multiple lasers with shape forming optics. Laser being extremely directional by its very nature, the range data acquired during unit scanning naturally may need equally precise spatio-temporal information to go with it, at an update rate no less than the update rate of the range data itself, in order to place the current range data into correct spatio-temporal locations within the larger data structure. This is in contrast to the typical radar beam, which may not very much be affected by roll and pitch angle parameters. The data back-calculation of back-mapping approach may require the laser(s) to fan uncompensated, then back-calculate exactly where, in which direction, and in which time, the laser(s) were pointing during the scan or data collection time interval.

In summary, it may be efficient to track the effective pointing direction of the multi-channel laser fan blade beam, i.e. the sensing area 113, relative to the vessel 101, so that the immediate range data can be correctly located within the larger software structure, and data and image skew thus be avoided. The pan-tilt unit motors may also provide meta-data which can be used for further position and orientation information collection. This information may be useful to stabilize readings and remove long term drift issues.

The system 100 may record a complete set of past measurements of the scanning lidar 105, 107, in order to construct a model of the space in front of the instrument, i.e. the sensor head 103a. Since lidar works on the principles of range measurement, this "3D" model of the scene being scanned may be broken up into discrete intervals, or "range bins", in all three dimensions, thus constructing a "point cloud." The data fusion requirements may adapt the live imagery from the at least one camera 109a,b into a georeferenced image representing the 2D view around the vessel 101, where the at least one camera 109a,b is pointing towards, and to establish a georeferenced 3D position and 3-axis positioning and attitude solution for the sensor unit 103, such that the pixels and voxels in the imagery and point cloud, respectively, are tied to a consistent coordinate system. The calibration of the instrument through data fusion may allow for consistent and useful data transmission to the client applications.

The georeferenced 3D position and full 6 degrees-of-freedom measurements of the sensor unit 103 may then ensure that all the data inputs from the various sensors are tied down to a consistent and stable and uniform coordinate system, and this may also be used for multi-sensor data co-registration in that the laser beams, and the output from the at least one cameras 109a,b can be overlayed in time and space, and the data feeds "follow" each other in synch, such that the data from the laser beams can provide data to show the range and other characteristics of a target, i.e. the at least one object, seen in the video feed(s). The targets detected in the camera feeds may then be visible also in the LADAR PPI GUI even if lasers do not directly detect the targets (for various reasons, e.g. out of range, not within the FOV of laser, etc.). Vice versa, the targets detected by lidar 105, 107 may be cross-matched, and cross-registered with the targets seen in the video feeds, and the measured characteristics of range, speed, CPA, TCPA, BCR, BCT, heading, etc. may be available affixed to the right target on the screen of the video feeds. Lidar and video feed integration may allow for multiple target tracking in the same instances.

In an embodiment, when target detection and/or identification is done in the camera feeds, and the range data is overlayed, the true dimensions of the target may also be calculated using simple geometrical projection procedures.

In a further embodiment, this information of the system pointing direction can be used to limit the motions or auto-adjustment of the pan-tilt unit 110a,b towards directions and regions of the ship's surroundings where the lidar beam stays close to the ocean surface.

Thus, as illustrated in Fig. 7, the system 100 can operate in the maritime environment based on the improved sensor unit 103 for providing improved sensor data for detecting the characteristic of the at least one object, which allows the vessel 101 to navigate with a reduced risk of collision.

In several embodiments provided in the present application, it should be understood that the disclosed system and method may be implemented in other manners. For example, the described system embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented e.g. in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one single unit, or each of the units may exist alone physically, or two or more units are integrated into one single unit.

REFERENCE SIGNS

| | |
|---|---|
| 100 | System |
| 101 | Vessel |
| 103 | Sensor unit |
| 103a | Sensor head |
| 103b | Sensor base |
| 105 | Laser transmitter |
| 107 | Laser detection unit |
| 109a | RGB camera |
| 109b | Infrared camera |
| 110a,b | Pan-tilt unit |
| 111 | Processor |
| 113 | Sensing area |
| 114 | Laser pulses |
| 115 | Junction box |
| 117 | FPGA |
| 119 | Inertial sensor module |
| 121 | Global Navigation Satellite System Module |
| 123 | Power supply |
| 125 | First module |
| 127 | Second module |
| 129 | Third Module |
| 131 | Step of a machine learning process |
| 133 | Step of a machine learning process |
| 135 | Step of a machine learning process |
| 137 | Step of a machine learning process |
| 139 | Step of a machine learning process |
| 141 | Step of a machine learning process |
| 143 | Step of a machine learning process |
| 145 | Step of a machine learning process |
| 147 | Zone |

**Claims**

1. A system (100) for operating in a maritime environment with a vessel (101), the vessel (101) comprising:

   a sensor unit (103), wherein the sensor unit (103) comprises a first plurality of laser transmitters (105), each laser transmitter of the first plurality of laser transmitters (105) being configured to simultaneously transmit a sensing laser pulse towards a common azimuth angle and at different first elevation angles of a predefined elevation angle range;
   wherein the sensor unit (103) comprises a laser detection unit (107), wherein the laser detection unit (107) comprises a second plurality of detectors, wherein detectors of the second plurality of detectors are configured to detect reflected laser pulses originating from reflections of the sensing laser pulses on at least one object in the maritime environment at the common azimuth angle and at different second elevation angles of the predefined elevation angle range,
   wherein the sensor unit (103) comprises at least one camera (109a, 109b); and
   a processor (111), configured to receive sensor signals from each of the detectors, to receive camera signals from the at least one camera (109a, 109b), and to determine a characteristic of the at least one object based on the received sensor signals and the received camera signals,
   wherein the processor (111) is configured to alternately modulate the sensing laser pulses by a first binary pseudo-random coding sequence and a second binary pseudo-random coding sequence, wherein the first binary pseudo-random coding sequence comprises a predefined number of identical first subsequences and wherein the second binary pseudo-random coding sequence comprises the predefined number of identical second subsequences, wherein the second subsequences are different from the first subsequences.

2. The system (100) for operating in a maritime environment according to claim 1, wherein the predefined elevation angle range ranges from 2° to 20°, in particular is 5°, and/or a zooming function of the sensor unit allows the elevation angle range to be changed.

3. The system (100) for operating in a maritime environment according to claim 1 or 2, wherein angles of the different first elevation angles in the predefined elevation angle range are equidistantly distributed, and/or wherein the first plurality of laser transmitters (105) entirely covers a sensing area (113) defined by the predefined elevation angle range for sensing the at least one object.

4. The system (100) for operating in a maritime environment according to any one of the preceding claims, wherein a first number of the first plurality of laser transmitters (105) of the sensor unit (103) is smaller than a second number of the second plurality of detectors of the laser detection unit (107) of the sensor unit (103), in particular wherein the first number is half of the second number.

5. The system (100) for operating in a maritime environment according to any one of the preceding claims, wherein the at least one camera (109a, 109b) comprises a Red Green Blue, RGB, camera (109a) for detecting the visual light wave spectrum and an infrared camera (109b) for detecting the infrared light wave spectrum, wherein detection areas of the RGB camera (109a) and the infrared camera (109b) cover the different first elevation angles of the first plurality of laser transmitters (105), wherein the processor (111) is configured to determine the characteristic of the at least one object based on the received sensor signals from the detectors and based on the camera signals received from the RGB camera and the infrared camera.

**6.** The system (100) for operating in a maritime environment according to any one of the preceding claims, wherein the processor (111) is configured to generate a three-dimensional point cloud based on the sensor signals from the detectors, wherein the sensor unit (103) comprises position and orientation sensors configured to detect position and orientation information of the sensor unit (103), wherein the processor (111) is configured to link the received camera signals from the at least one camera (109a, 109b) with the points of the three-dimensional point cloud based on the position and orientation information of the sensor unit (103) in order to link the sensor signals with the camera signals.

**7.** The system (100) for operating in a maritime environment according to claim 6, wherein the orientation information of the sensor unit (103) comprises yaw information, roll information, pitch information, heave information, sway information surge information, and/or pointing direction information with respect to a magnetic and geographic reference of the sensor unit (103).

**8.** The system (100) for operating in a maritime environment according to any one of the preceding claims, wherein the sensor unit (103) is swivel-mounted along an azimuth direction on a sensor base (103b), wherein the processor (111) is configured to swivel the sensor unit (103) in the azimuth direction between an adjustable swivel angle area, in particular with an adjustable swivel angle speed.

**9.** The system (100) for operating in a maritime environment according to any one of the preceding claims, wherein the processor (111) is configured to demodulate the reflected laser pulse based on the sensor signals by correlating the sensor signals with a reference signal sequence, wherein the reference signal sequence is based on the first binary pseudo-random coding sequence and the second binary pseudo-random coding sequence.

**10.** The system (100) for operating in a maritime environment according to any one of the preceding claims, wherein the characteristic of the at least one object comprises an object class, an object dimension, an object size, an object speed, an object heading, a Closest Point of Approach, CPA, a Time to Closest Point of Approach, TCPA, a Bow Crossing Range, BCR, and/or a Bow Crossing Time, BCT, of the at least one object.

**11.** The system (100) for operating in a maritime environment according to any one of the preceding claims, wherein the processor (111) is configured to implement a local neural network to detect the at least one object and to determine the characteristic of the at least one object, wherein the processor (111) is configured to feed the sensor signals from the detectors and the camera signals from the at least one camera (109a, 109b) as inputs to the local neural network, wherein the processor (111) is configured to extract the characteristic of the at least one object as an output of the local neural network.

**12.** The system (100) for operating in a maritime environment according to claim 11, wherein the inputs of the local neural network further comprise further sensor data from further sensors of the vessel (101), in particular data from an Automatic Identification System, AIS, receiver, and/or data from a radar of the vessel (101).

**13.** The system (100) for operating in a maritime environment according to claim 11 or 12, wherein the processor (111) is configured to determine a condition of the maritime environment, in particular a weather condition and/or a lightning condition, and wherein the processor (111) is configured to weight the inputs of the local neural network based on the condition of the maritime environment.

**14.** The system (100) for operating in a maritime environment according to any one of claims 11 to 13, wherein the vessel (101) comprises a memory configured to store the sensor signals and the camera signals, in particular a subset associated with the at least one object, together with the determined characteristic of the at least one object in a data object,

wherein the vessel (101) comprises a communication interface configured to transmit the data object to a cloud server of the system (100) configured to receive the data object,
wherein the cloud server is configured to implement a global neural network, to update the global neural network based on the received data object and to transmit the global neural network to the vessel (101),
wherein the processor (111) of the vessel (101) is configured to update the local neural network based on the received global neural network.

**15.** The system (100) for operating in a maritime environment according to claim 14, wherein the cloud server is configured to generate further data objects based on the data object, wherein the further data objects comprise generated further sensor signals different from the sensor signals of the data object and/or further camera signals different from the camera signals of the data object, wherein the cloud server is configured to update the global neural network based on the generated further data objects.

**16.** The system (100) for operating in a maritime environment according to any one of the preceding claims, wherein the processor (111) is configured to determine a hazard score based on the characteristic of the at least one object, wherein the hazard score indicates a threat level of a hazardous situation between the vessel (101) and the at least one object, wherein the processor (111) is configured to trigger an alarm mechanism of the vessel (101) when the hazard score is above a predefined threshold.

**17.** The system (100) for operating in a maritime environment according to any one of the preceding claims, wherein the vessel (101) comprises a display for visualizing the maritime environment, wherein the display is configured to display the at least one object and the characteristic of the at least one object in a live visualization of the maritime environment, wherein the live visualization is switchable between a position display, in particular a plan-position indicator view, based on the sensor signals of the detectors and at least a video display, in particular a RGB display and an infrared display, based on the camera signals from the at least one camera (109a, 109b).

**18.** The system (100) for operating in a maritime environment according to claim 17, wherein the characteristic of the at least one object is visualized by a vector at a visualization of the at least one object on the display and/or at a visualization of the vessel (101) on the display.

**19.** The system (100) for operating in a maritime environment according to any one of the preceding claims, wherein at least some laser transmitters (105) of the first plurality of laser transmitters (105) operate at a Near-Infrared-Region (NIR) wavelength, in particular at 800nm to 2,500nm, more particular at 950 nm; and/or at least some laser transmitters (105) of the first plurality of laser transmitters (105) operate at a blue-green wavelength, in particular at 560 nm.

**20.** The system (100) for operating in a maritime environment according to any one of the preceding claims, wherein each laser transmitter of the first plurality of laser transmitters (105) comprises a cylindrical lens and covers the predefined elevation angle range, wherein the transmitters (125) of the first plurality of transmitters (105) are configured to fully overlap at a maximum range of the first plurality of laser transmitters (105).

**21.** The system (100) for operating in a maritime environment according to any one of the preceding claims, wherein each laser transmitter of the first plurality of laser transmitters (105) is horizontally offset from a vertical axis of the laser detection unit (107).

**Patentansprüche**

**1.** System (100) zum Betrieb in einer maritimen Umgebung mit einem Schiff (101), wobei das Schiff (101) Folgendes umfasst:

eine Sensoreinheit (103), wobei die Sensoreinheit (103) eine erste Vielzahl von Lasersendern (105) umfasst, wobei jeder Lasersender der ersten Vielzahl von Lasersendern (105) ausgebildet ist, gleichzeitig einen Messlaserpuls in Richtung eines gemeinsamen Azimutwinkels und in verschiedenen ersten Höhenwinkeln eines vordefinierten Höhenwinkelbereichs auszusenden;
wobei die Sensoreinheit (103) eine Laserdetektionseinheit (107) umfasst, wobei die Laserdetektionseinheit (107) eine zweite Vielzahl von Detektoren umfasst, wobei Detektoren der zweiten Vielzahl von Detektoren ausgebildet sind, reflektierte Laserpulse zu erfassen, die von Reflexionen der Messlaserpulse an mindestens einem Objekt in der maritimen Umgebung im gemeinsamen Azimutwinkel und in verschiedenen zweiten Höhenwinkeln des vordefinierten Höhenwinkelbereichs stammen,
wobei die Sensoreinheit (103) mindestens eine Kamera (109a, 109b) umfasst; und
einen Prozessor (111), welcher ausgebildet ist, Sensorsignale von jedem der Detektoren zu empfangen, Kamerasignale von der mindestens einen Kamera (109a, 109b) zu empfangen und eine Charakteristik des mindestens einen Objekts auf Basis der empfangenen Sensorsignale und der empfangenen Kamerasignale zu bestimmen,
wobei der Prozessor (111) ausgebildet ist, die Messlaserpulse abwechselnd mit einer ersten binären Pseudozufallscodierungssequenz und einer zweiten binären Pseudozufallscodierungssequenz zu modulieren, wobei die erste binäre Pseudozufallscodierungssequenz eine vordefinierte Anzahl identischer erster Teilsequenzen umfasst und wobei die zweite binäre Pseudozufallscodierungssequenz die vordefinierte Anzahl identischer zweiter Teilsequenzen umfasst, wobei sich die zweiten Teilsequenzen von den ersten Teilsequenzen unterscheiden.

**2.** System (100) zum Betrieb in einer maritimen Umgebung nach Anspruch 1, wobei der vordefinierte Höhenwinkelbereich von 2° bis 20° reicht, insbesondere 5° beträgt, und/oder wobei eine Zoomfunktion der Sensoreinheit die Änderung des Höhenwinkelbereichs ermöglicht.

3. System (100) zum Betrieb in einer maritimen Umgebung nach Anspruch 1 oder 2, wobei die Winkel der verschiedenen ersten Höhenwinkel in dem vordefinierten Höhenwinkelbereich äquidistant verteilt sind und/oder wobei die erste Vielzahl von Lasersendern (105) einen durch den vordefinierten Höhenwinkelbereich definierten Erfassungsbereich (113) zur Erfassung des mindestens einen Objekts vollständig abdeckt.

4. System (100) zum Betrieb in einer maritimen Umgebung nach einem der vorhergehenden Ansprüche, wobei eine erste Anzahl der ersten Vielzahl von Lasersendern (105) der Sensoreinheit (103) kleiner ist als eine zweite Anzahl der zweiten Vielzahl von Detektoren der Laserdetektionseinheit (107) der Sensoreinheit (103), wobei insbesondere die erste Anzahl die Hälfte der zweiten Anzahl beträgt.

5. System (100) zum Betrieb in einer maritimen Umgebung nach einem der vorhergehenden Ansprüche, wobei die mindestens eine Kamera (109a, 109b) eine Rot-Grün-Blau-, RGB-, Kamera (109a) zur Erfassung des sichtbaren Lichtwellenspektrums und eine Infrarotkamera (109b) zur Erfassung des Infrarot-Lichtwellenspektrums umfasst, wobei Erfassungsbereiche der RGB-Kamera (109a) und der Infrarotkamera (109b) die verschiedenen ersten Höhenwinkel der ersten Vielzahl von Lasersendern (105) abdecken,
wobei der Prozessor (111) ausgebildet ist, die Charakteristik des mindestens einen Objekts auf Basis der von den Detektoren empfangenen Sensorsignale und auf Basis der von der RGB-Kamera und der Infrarotkamera empfangenen Kamerasignale zu bestimmen.

6. System (100) zum Betrieb in einer maritimen Umgebung nach einem der vorhergehenden Ansprüche, wobei der Prozessor (111) ausgebildet ist, eine dreidimensionale Punktwolke auf Basis der Sensorsignale der Detektoren zu erzeugen, wobei die Sensoreinheit (103) Positions- und Orientierungssensoren umfasst, die ausgebildet sind, Positions- und Orientierungsinformationen der Sensoreinheit (103) zu erfassen, wobei der Prozessor (111) ausgebildet ist, die empfangenen Kamerasignale von der mindestens einen Kamera (109a, 109b) mit den Punkten der dreidimensionalen Punktwolke auf Basis der Positions- und Orientierungsinformationen der Sensoreinheit (103) zu verknüpfen, um die Sensorsignale mit den Kamerasignalen zu verknüpfen.

7. System (100) zum Betrieb in einer maritimen Umgebung nach Anspruch 6, wobei die Orientierungsinformationen der Sensoreinheit (103) Gier-, Roll-, Nick-, Hebe-, Querbewegungs-, Längsbewegungs- und/oder Ausrichtungsinformationen in Bezug auf eine magnetische und geografische Referenz der Sensoreinheit (103) umfassen.

8. System (100) zum Betrieb in einer maritimen Umgebung nach einem der vorhergehenden Ansprüche, wobei die Sensoreinheit (103) entlang einer Azimutrichtung schwenkbar auf einem Sensorsockel (103b) montiert ist, wobei der Prozessor (111) ausgebildet ist, die Sensoreinheit (103) in Azimutrichtung zwischen einem einstellbaren Schwenkwinkelbereich, insbesondere mit einer einstellbaren Schwenkwinkelgeschwindigkeit, zu schwenken.

9. System (100) zum Betrieb in einer maritimen Umgebung nach einem der vorhergehenden Ansprüche, wobei der Prozessor (111) ausgebildet ist, den reflektierten Laserpuls auf Basis der Sensorsignale durch Korrelation der Sensorsignale mit einer Referenzsignalsequenz zu demodulieren, wobei die Referenzsignalsequenz auf der ersten binären Pseudozufallscodierungssequenz und der zweiten binären Pseudozufallscodierungssequenz basiert.

10. System (100) zum Betrieb in einer maritimen Umgebung nach einem der vorhergehenden Ansprüche, wobei die Charakteristik des mindestens einen Objekts eine Objektklasse, eine Objektabmessung, eine Objektgröße, eine Objektgeschwindigkeit, einen Objektkurs, einen nächsten Annäherungspunkt, CPA, eine Zeit bis zum nächsten Annäherungspunkt, TCPA, eine Bugkreuzungsreichweite, BCR und/oder eine Bugkreuzungszeit, BCT, des mindestens einen Objekts umfasst.

11. System (100) zum Betrieb in einer maritimen Umgebung nach einem der vorhergehenden Ansprüche, wobei der Prozessor (111) ausgebildet ist, ein lokales neuronales Netzwerk zu implementieren, um das mindestens eine Objekt zu erfassen und die Charakteristik des mindestens einen Objekts zu bestimmen, wobei der Prozessor (111) ausgebildet ist, die Sensorsignale der Detektoren und die Kamerasignale der mindestens einen Kamera (109a, 109b) als Eingaben an das lokale neuronale Netzwerk weiterzuleiten, wobei der Prozessor (111) ausgebildet ist, die Charakteristik des mindestens einen Objekts als eine Ausgabe des lokalen neuronalen Netzwerks zu extrahieren.

12. System (100) zum Betrieb in einer maritimen Umgebung nach Anspruch 11, wobei die Eingaben des lokalen neuronalen Netzes ferner weitere Sensordaten von weiteren Sensoren des Schiffes (101) umfassen, insbesondere Daten von einem automatischen Identifizierungssystem-, AIS-, Empfänger und/oder Daten von einem Radar des Schiffes (101).

**13.** System (100) zum Betrieb in einer maritimen Umgebung nach Anspruch 11 oder 12, wobei der Prozessor (111) ausgebildet ist, einen Zustand der maritimen Umgebung, insbesondere eine Wetterbedingung und/oder eine Beleuchtungsbedingung, zu ermitteln und wobei der Prozessor (111) ausgebildet ist, die Eingaben des lokalen neuronalen Netzes auf Basis des Zustands der maritimen Umgebung zu gewichten.

**14.** System (100) zum Betrieb in einer maritimen Umgebung nach einem der Ansprüche 11 bis 13, wobei das Schiff (101) einen Speicher umfasst, welcher ausgebildet ist, die Sensorsignale und die Kamerasignale, insbesondere eine Teilmenge, die dem mindestens einen Objekt zugeordnet ist, zusammen mit der bestimmten Charakteristik des mindestens einen Objekts in einem Datenobjekt zu speichern, wobei das Schiff (101) eine Kommunikationsschnittstelle umfasst, welche ausgebildet ist, das Datenobjekt an einen Cloud-Server des Systems (100) zu übermitteln, welcher ausgebildet ist, das Datenobjekt zu empfangen,

wobei der Cloud-Server ausgebildet ist, ein globales neuronales Netzwerk zu implementieren, das globale neuronale Netzwerk auf Basis des empfangenen Datenobjekts zu aktualisieren und das globale neuronale Netzwerk an das Schiff (101) zu übertragen,
wobei der Prozessor (111) des Schiffes (101) ausgebildet ist, das lokale neuronale Netzwerk auf Basis des empfangenen globalen neuronalen Netzwerks zu aktualisieren.

**15.** System (100) zum Betrieb in einer maritimen Umgebung nach Anspruch 14, wobei der Cloud-Server ausgebildet ist, auf Basis des Datenobjekts weitere Datenobjekte zu generieren, wobei die weiteren Datenobjekte sich von den Sensorsignalen des Datenobjekts unterscheidende weitere generierte Sensorsignale und/oder sich von den Kamerasignalen des Datenobjekts unterscheidende generierte weitere Kamerasignale umfassen, wobei der Cloud-Server ausgebildet ist, das globale neuronale Netzwerk auf Basis der generierten weiteren Datenobjekte zu aktualisieren.

**16.** System (100) zum Betrieb in einer maritimen Umgebung nach einem der vorhergehenden Ansprüche, wobei der Prozessor (111) ausgebildet ist, auf Basis der Charakteristik des mindestens einen Objekts einen Gefährdungswert zu ermitteln, wobei der Gefährdungswert einen Bedrohungsgrad einer Gefahrensituation zwischen dem Schiff (101) und dem mindestens einen Objekt angibt, wobei der Prozessor (111) ausgebildet ist, einen Alarmmechanismus des Schiffes (101) auszulösen, wenn der Gefährdungswert einen vordefinierten Schwellenwert überschreitet.

**17.** System (100) zum Betrieb in einer maritimen Umgebung nach einem der vorhergehenden Ansprüche, wobei das Schiff (101) ein Display zur Visualisierung der maritimen Umgebung umfasst, wobei das Display ausgebildet ist, das mindestens eine Objekt und die Charakteristik des mindestens einen Objekts in einer Live-Visualisierung der maritimen Umgebung anzuzeigen, wobei die Live-Visualisierung zwischen einer Positionsanzeige, insbesondere einer Planpositionsanzeige, basierend auf den Sensorsignalen der Detektoren, und mindestens einer Videoanzeige, insbesondere einer RGB-Anzeige und einer Infrarotanzeige, basierend auf den Kamerasignalen der mindestens einen Kamera (109a, 109b), umschaltbar ist.

**18.** System (100) zum Betrieb in einer maritimen Umgebung nach Anspruch 17, wobei die Charakteristik des mindestens einen Objekts bei einer Visualisierung des mindestens einen Objekts auf dem Display und/oder bei einer Visualisierung des Schiffes (101) auf dem Display durch einen Vektor visualisiert wird.

**19.** System (100) zum Betrieb in einer maritimen Umgebung nach einem der vorhergehenden Ansprüche, wobei mindestens einige Lasersender (105) der ersten Vielzahl von Lasersendern (105) bei einer Nah-Infrarotbereich- (NIR-) Wellenlänge, insbesondere bei 800 nm bis 2.500 nm, speziell bei 950 nm, arbeiten; und/oder wobei mindestens einige Lasersender (105) der ersten Vielzahl von Lasersendern (105) bei einer blaugrünen Wellenlänge, insbesondere bei 560 nm, arbeiten.

**20.** System (100) zum Betrieb in einer maritimen Umgebung nach einem der vorhergehenden Ansprüche, wobei jeder Lasersender der ersten Vielzahl von Lasersendern (105) eine Zylinderlinse aufweist und den vordefinierten Höhenwinkelbereich abdeckt, wobei die Sender (125) der ersten Vielzahl von Sendern (105) ausgebildet sind, sich bei maximaler Reichweite der ersten Vielzahl von Lasersendern (105) vollständig zu überlappen.

**21.** System (100) zum Betrieb in einer maritimen Umgebung nach einem der vorhergehenden Ansprüche, wobei jeder Lasersender der ersten Vielzahl von Lasersendern (105) horizontal gegenüber einer vertikalen Achse der Laserdetektionseinheit (107) versetzt ist.

## Revendications

1. Un système (100) destiné à fonctionner dans un environnement maritime avec un navire (101), ce navire (101) comprenant :

une unité de capteur (103), dans laquelle l'unité de capteur (103) comprend une première pluralité d'émetteurs laser (105), chaque émetteur laser de la première pluralité d'émetteurs laser (105) étant configuré pour transmettre simultanément une impulsion laser de détection vers un angle d'azimut commun et à différents premiers angles d'élévation d'une plage d'angles d'élévation prédéfinie ;
dans lequel l'unité de capteur (103) comprend une unité de détection laser (107), dans laquelle l'unité de détection laser (107) comprend une seconde pluralité de détecteurs, dans lesquels les détecteurs de la seconde pluralité de détecteurs sont configurés pour détecter les impulsions laser réfléchies provenant des réflexions des impulsions laser de détection sur au moins un objet dans l'environnement maritime à l'angle d'azimut commun et à différents seconds angles d'élévation de la plage d'angles d'élévation prédéfinie,
dans lequel l'unité de capteur (103) comprend au moins une caméra (109a, 109b) ; et
un processeur (111), configuré pour recevoir les signaux des capteurs de chacun des détecteurs, pour recevoir les signaux de la caméra d'au moins une caméra (109a, 109b), et pour déterminer une caractéristique d'au moins un objet sur la base des signaux des capteurs et des signaux de la caméra reçus,
dans lequel le processeur (111) est configuré pour moduler alternativement les impulsions laser de détection par une première séquence de codage pseudo-aléatoire binaire et une deuxième séquence de codage pseudo-aléatoire binaire, dans laquelle la première séquence de codage pseudo-aléatoire binaire comprend un nombre prédéfini de premières sous-séquences identiques et dans laquelle la deuxième séquence de codage pseudo-aléatoire binaire comprend le nombre prédéfini de deuxièmes sous-séquences identiques, dans laquelle les deuxièmes sous-séquences sont différentes des premières sous-séquences.

2. Le système (100) destiné à fonctionner dans un environnement maritime selon la revendication 1, dans lequel la plage d'angle d'élévation prédéfinie est comprise entre 2° et 20°, en particulier 5°, et/ou une fonction de zoom de l'unité de capteur permet de modifier la plage d'angle d'élévation.

3. Le système (100) destiné à fonctionner dans un environnement maritime selon la revendication 1 ou 2, dans lequel les angles des différents premiers angles d'élévation dans la plage d'angles d'élévation prédéfinie sont répartis de manière équidistante, et/ou dans lequel la première pluralité d'émetteurs laser (105) couvre entièrement une zone de détection (113) définie par la plage d'angles d'élévation prédéfinie pour détecter au moins un objet.

4. Le système (100) destiné à fonctionner dans un environnement maritime selon l'une quelconque des revendications précédentes, dans lequel un premier nombre de la première pluralité d'émetteurs laser (105) de l'unité de capteur (103) est inférieur à un deuxième nombre de la deuxième pluralité de détecteurs de l'unité de détection laser (107) de l'unité de capteur (103), en particulier dans lequel le premier nombre est la moitié du deuxième nombre.

5. Le système (100) destiné à fonctionner dans un environnement maritime selon l'une quelconque des revendications précédentes, dans lequel la ou les caméras (109a, 109b) comprennent une caméra rouge-vert-bleu, RVB, (109a) pour détecter le spectre des ondes lumineuses visibles et une caméra infrarouge (109b) pour détecter le spectre des ondes lumineuses infrarouges, les zones de détection de la caméra RVB (109a) et de la caméra infrarouge (109b) couvrant les différents premiers angles d'élévation de la première pluralité d'émetteurs laser (105),
dans lequel le processeur (111) est configuré pour déterminer la caractéristique d'au moins un objet en fonction des signaux de capteur reçus des détecteurs et en fonction des signaux de caméra reçus de la caméra RGB et de la caméra infrarouge.

6. Le système (100) destiné à fonctionner dans un environnement maritime selon l'une quelconque des revendications précédentes, dans lequel le processeur (111) est configuré pour générer un nuage de points tridimensionnel basé sur les signaux des capteurs provenant des détecteurs, dans lequel l'unité de capteur (103) comprend des capteurs de position et d'orientation configurés pour détecter les informations de position et d'orientation de l'unité de capteur (103), dans lequel le processeur (111) est configuré pour relier les signaux de caméra reçus d'au moins une caméra (109a, 109b) aux points du nuage de points tridimensionnel basé sur les informations de position et d'orientation de l'unité de capteur (103) afin de relier les signaux des capteurs aux signaux de la caméra.

7. Le système (100) destiné à fonctionner dans un environnement maritime selon la revendication 6, dans lequel les informations d'orientation de l'unité de capteur (103) comprennent des informations de lacet, de roulis, de tangage, de pilonnement, de dérive, de poussée et/ou des informations de direction de pointage par rapport à une référence magnétique et géographique de l'unité de capteur (103).

**8.** Le système (100) destiné à fonctionner dans un environnement maritime selon l'une quelconque des revendications précédentes, dans lequel l'unité de capteur (103) est montée de manière pivotante le long d'une direction azimutale sur une base de capteur (103b), dans lequel le processeur (111) est configuré pour faire pivoter l'unité de capteur (103) dans la direction azimutale entre une zone d'angle de pivotement réglable, notamment avec une vitesse d'angle de pivotement réglable.

**9.** Le système (100) destiné à fonctionner dans un environnement maritime selon l'une quelconque des revendications précédentes, dans lequel le processeur (111) est configuré pour démoduler l'impulsion laser réfléchie en fonction des signaux du capteur en corrélant les signaux du capteur avec une séquence de signal de référence, dans laquelle la séquence de signal de référence est basée sur la première séquence de codage pseudo-aléatoire binaire et la deuxième séquence de codage pseudo-aléatoire binaire.

**10.** Le système (100) destiné à fonctionner dans un environnement maritime selon l'une quelconque des revendications précédentes, dans lequel la caractéristique d'au moins un objet comprend une classe d'objet, une dimension d'objet, une taille d'objet, une vitesse d'objet, un cap d'objet, un point d'approche le plus proche, CPA, un temps jusqu'au point d'approche le plus proche, TCPA, une portée de franchissement d'étrave, BCR, et/ou un temps de franchissement d'étrave, BCT, d'au moins un objet.

**11.** Le système (100) destiné à fonctionner dans un environnement maritime selon l'une quelconque des revendications précédentes, dans lequel le processeur (111) est configuré pour mettre en œuvre un réseau neuronal local afin de détecter au moins un objet et de déterminer les caractéristiques de celuici, dans lequel le processeur (111) est configuré pour fournir les signaux des capteurs provenant des détecteurs et les signaux de la caméra provenant d'au moins une caméra (109a, 109b) comme entrées du réseau neuronal local, dans lequel le processeur (111) est configuré pour extraire les caractéristiques de l'au moins un objet comme sortie du réseau neuronal local.

**12.** Le système (100) destiné à fonctionner dans un environnement maritime selon la revendication 11, dans lequel les entrées du réseau neuronal local comprennent en outre des données de capteurs supplémentaires provenant d'autres capteurs du navire (101), notamment des données provenant d'un système d'identification automatique, AIS, récepteur et/ou des données provenant d'un radar du navire (101).

**13.** Le système (100) destiné à fonctionner dans un environnement maritime selon la revendication 11 ou 12, dans lequel le processeur (111) est configuré pour déterminer une condition de l'environnement maritime, en particulier une condition météorologique et/ou une condition de foudre, et dans lequel le processeur (111) est configuré pour pondérer les entrées du réseau neuronal local en fonction de la condition de l'environnement maritime.

**14.** Le système (100) destiné à fonctionner dans un environnement maritime selon l'une quelconque des revendications 11 à 13, dans lequel le navire (101) comprend une mémoire configurée pour stocker les signaux des capteurs et les signaux de la caméra, notamment un sous-ensemble associé à au moins un objet, ainsi que la caractéristique déterminée de ce ou ces objets dans un objet de données, le navire (101) comprenant une interface de communication configurée pour transmettre l'objet de données à un serveur cloud du système (100) configuré pour recevoir cet objet de données.

dans lequel le serveur cloud est configuré pour mettre en œuvre un réseau neuronal global, pour mettre à jour le réseau neuronal global en fonction de l'objet de données reçu et pour transmettre le réseau neuronal global au navire (101),
dans lequel le processeur (111) du navire (101) est configuré pour mettre à jour le réseau neuronal local en fonction du réseau neuronal global reçu.

**15.** Le système (100) destiné à fonctionner dans un environnement maritime selon la revendication 14, dans lequel le serveur cloud est configuré pour générer des objets de données supplémentaires à partir de l'objet de données, ces objets de données supplémentaires comprenant des signaux de capteurs supplémentaires générés différents des signaux de capteurs de l'objet de données et/ou des signaux de caméra supplémentaires différents des signaux de caméra de l'objet de données, le serveur cloud étant configuré pour mettre à jour le réseau neuronal global à partir des objets de données supplémentaires générés.

**16.** Le système (100) destiné à fonctionner dans un environnement maritime selon l'une quelconque des revendications précédentes, dans lequel le processeur (111) est configuré pour déterminer un score de danger basé sur la caractéristique d'au moins un objet, dans lequel le score de danger indique un niveau de menace d'une situation dangereuse entre le navire (101) et au moins un objet, dans lequel le processeur (111) est configuré pour déclencher un mécanisme d'alarme du navire (101) lorsque le score de danger est supérieur à un seuil prédéfini.

**17.** Le système (100) destiné à fonctionner dans un environnement maritime selon l'une quelconque des revendications précédentes, dans lequel le navire (101) comprend un écran pour visualiser l'environnement maritime, cet écran étant configuré pour afficher au moins un objet et les caractéristiques de cet objet dans une visualisation en direct de l'environnement maritime, cette visualisation en direct étant commutable entre un affichage de position, notamment une vue d'indicateur de position en plan, basée sur les signaux des capteurs des détecteurs, et au moins un affichage vidéo, notamment un affichage RVB et un affichage infrarouge, basé sur les signaux de la caméra provenant d'au moins une caméra (109a, 109b).

**18.** Le système (100) destiné à fonctionner dans un environnement maritime selon la revendication 17, dans lequel la caractéristique d'au moins un objet est visualisée par un vecteur lors d'une visualisation d'au moins un objet sur l'écran et/ou lors d'une visualisation du navire (101) sur l'écran.

**19.** Le système (100) destiné à fonctionner dans un environnement maritime selon l'une quelconque des revendications précédentes, dans lequel au moins certains émetteurs laser (105) de la première pluralité d' émetteurs laser (105) fonctionnent à une longueur d'onde de la région proche infrarouge (NIR), en particulier de 800 nm à 2 500 nm, plus particulièrement à 950 nm ; et/ou au moins certains émetteurs laser (105) de la première pluralité d'émetteurs laser (105) fonctionnent à une longueur d'onde bleu-vert, en particulier à 560 nm.

**20.** Le système (100) destiné à fonctionner dans un environnement maritime selon l'une quelconque des revendications précédentes, dans lequel chaque émetteur laser de la première pluralité d'émetteurs laser (105) comprend une lentille cylindrique et couvre la plage d'angle d'élévation prédéfinie, dans lequel les émetteurs (125) de la première pluralité d'émetteurs (105) sont configurés pour se chevaucher entièrement à une portée maximale de la première pluralité d'émetteurs laser (105).

**21.** Le système (100) destiné à fonctionner dans un environnement maritime selon l'une quelconque des revendications précédentes, dans lequel chaque émetteur laser de la première pluralité d'émetteurs laser (105) est décalé horizontalement par rapport à un axe vertical de l'unité de détection laser (107).

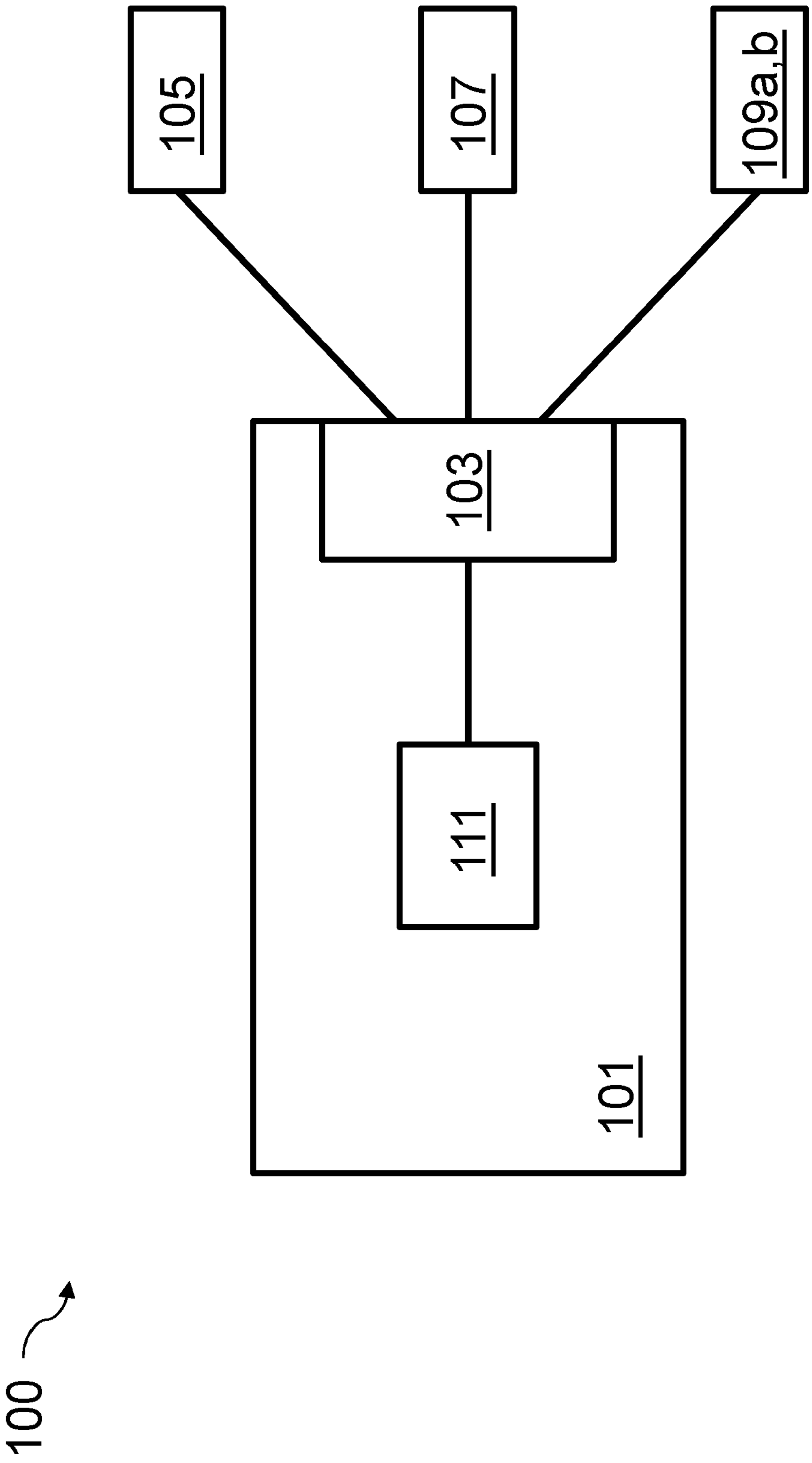


Fig. 1

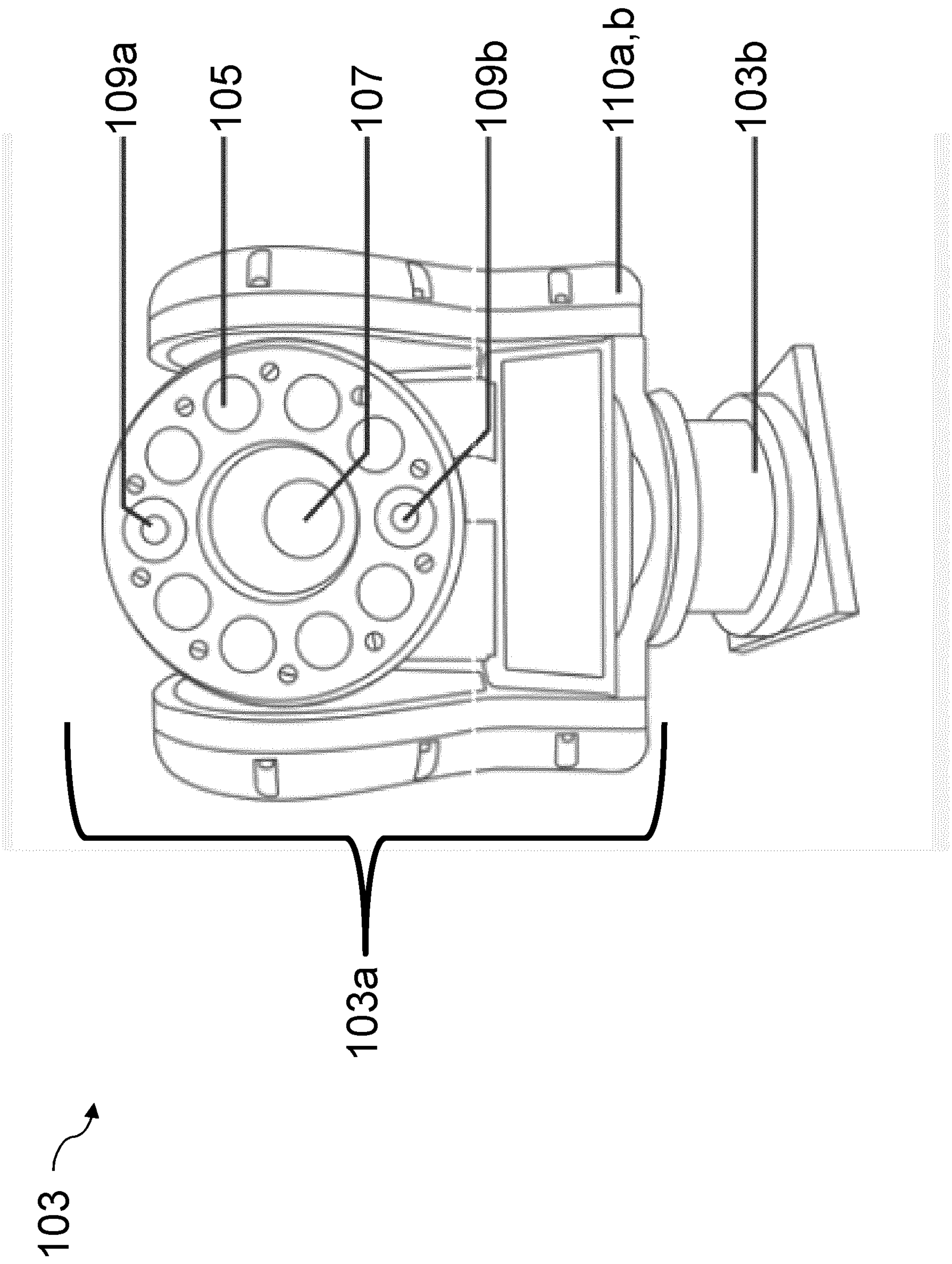


Fig. 2a

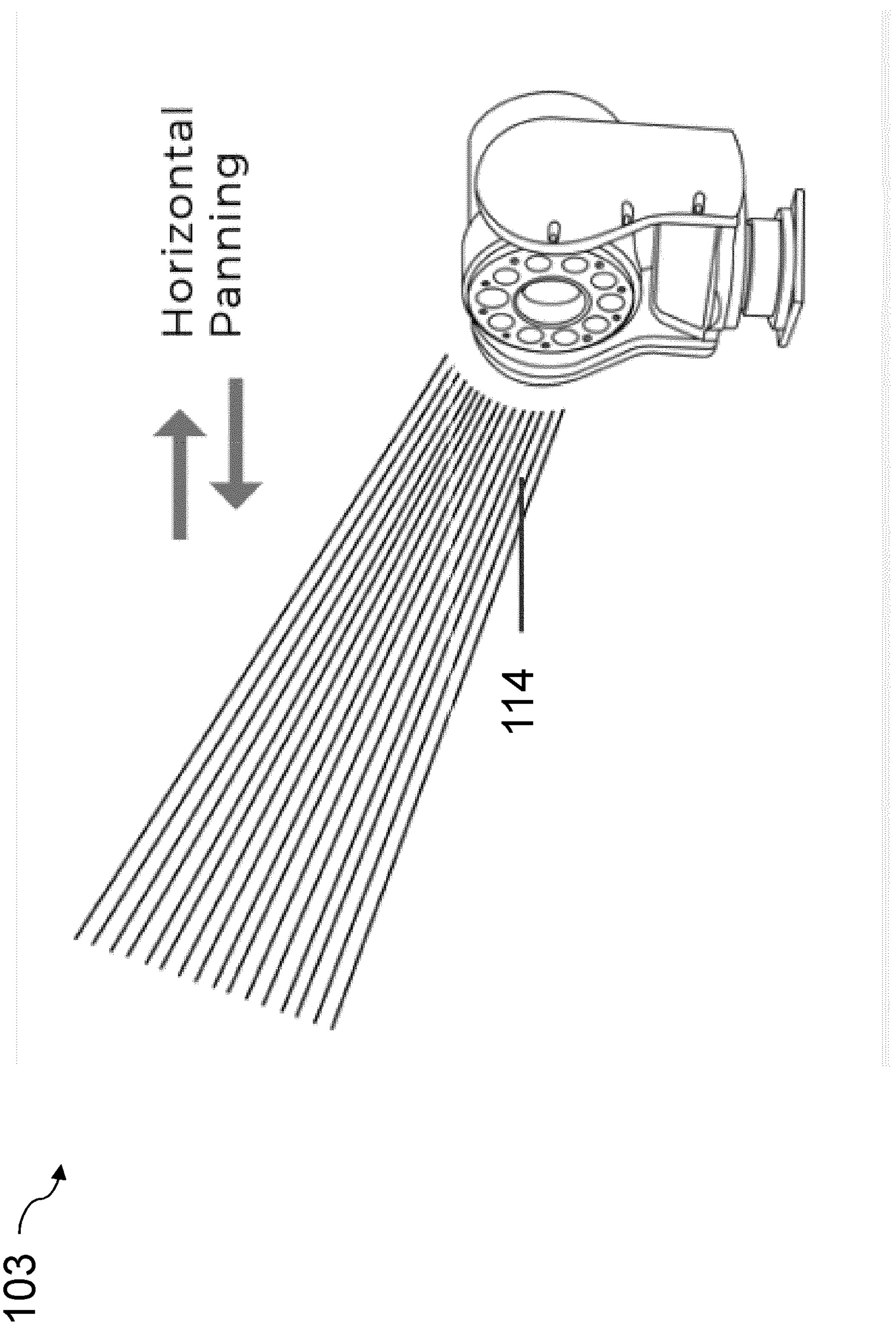


Fig. 2b

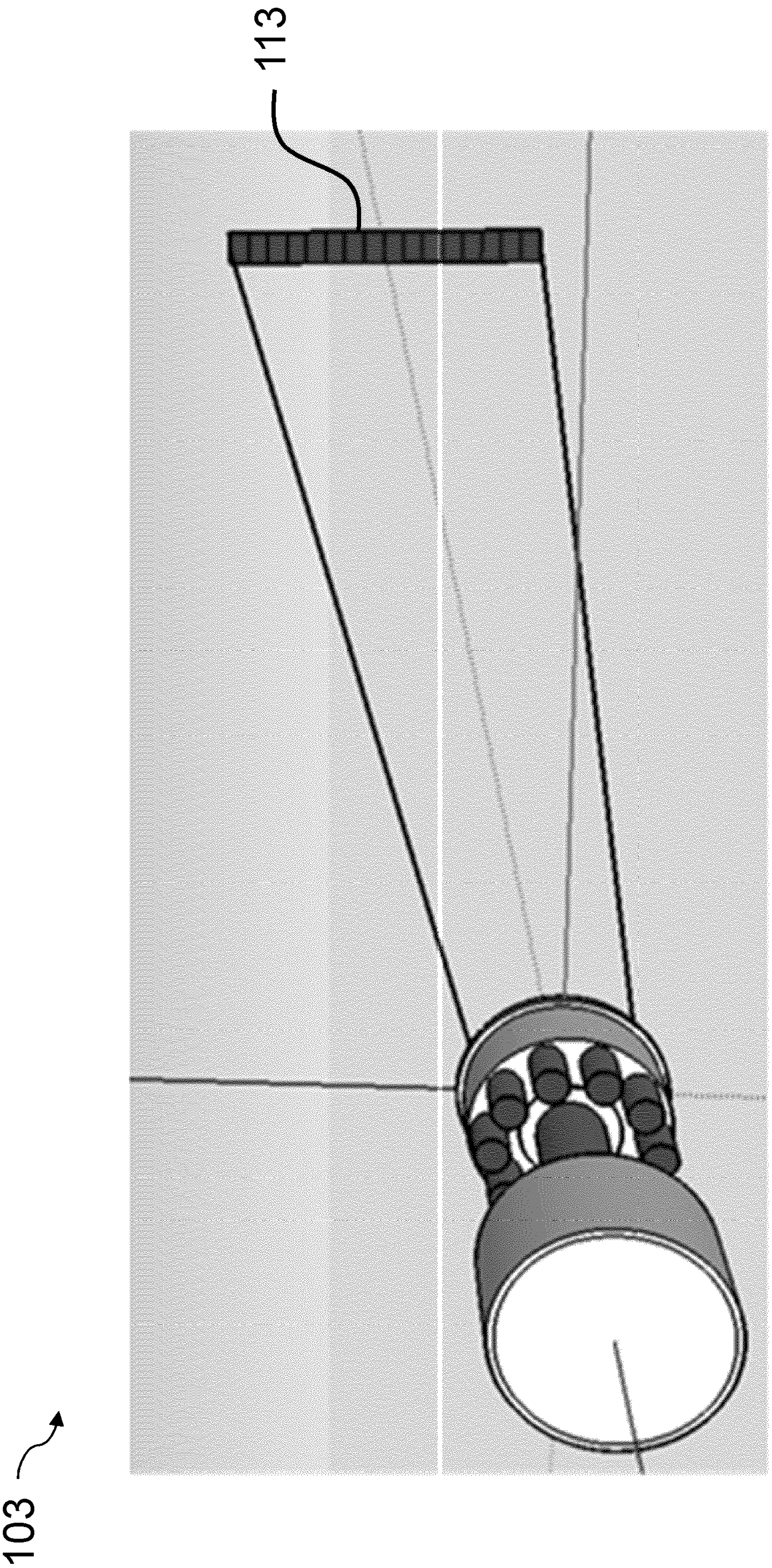


Fig. 2c

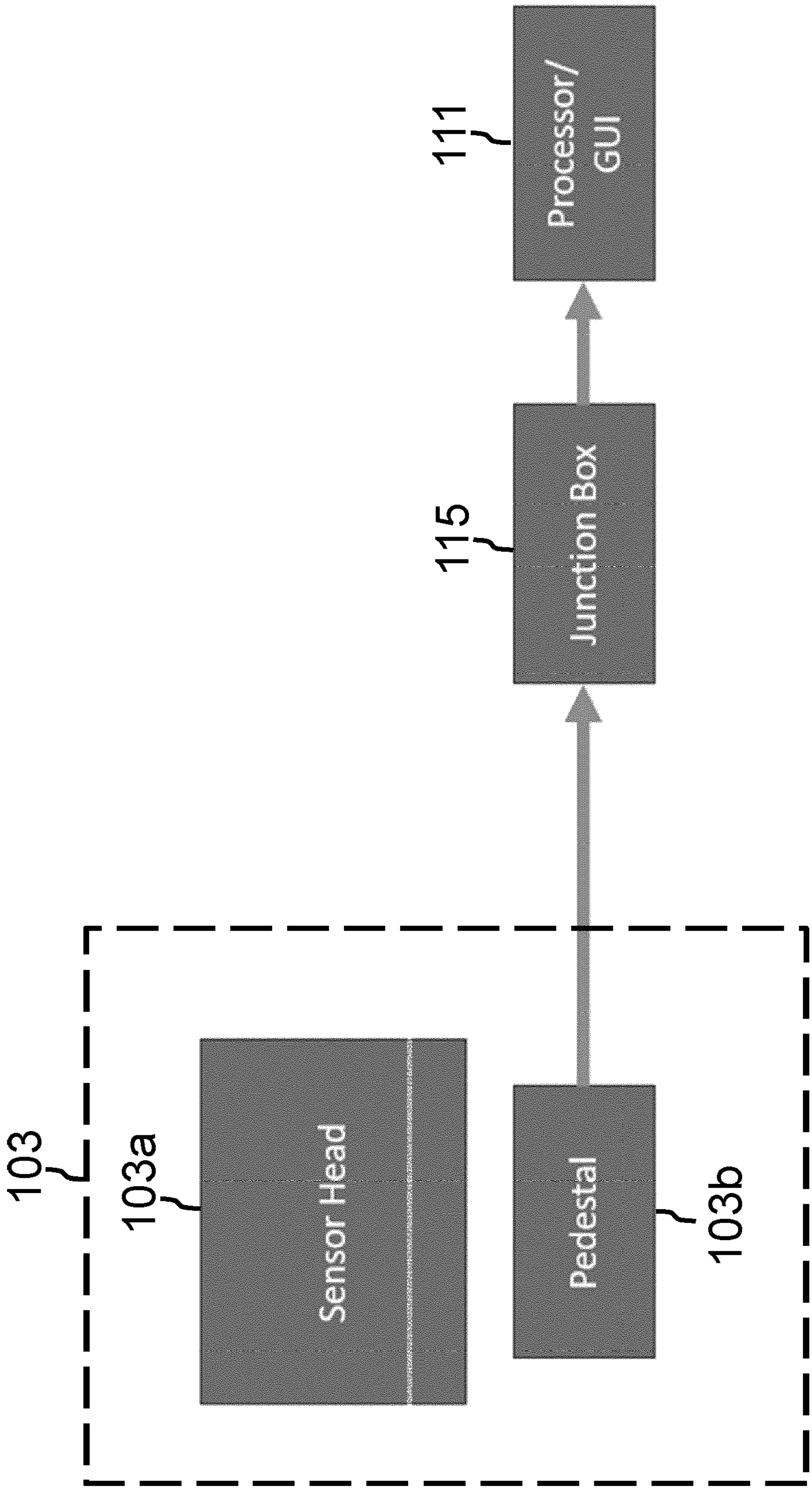
103
103a
Sensor Head
Pedestal
103b
115
Junction Box
111
Processor/
GUI

Fig. 3a

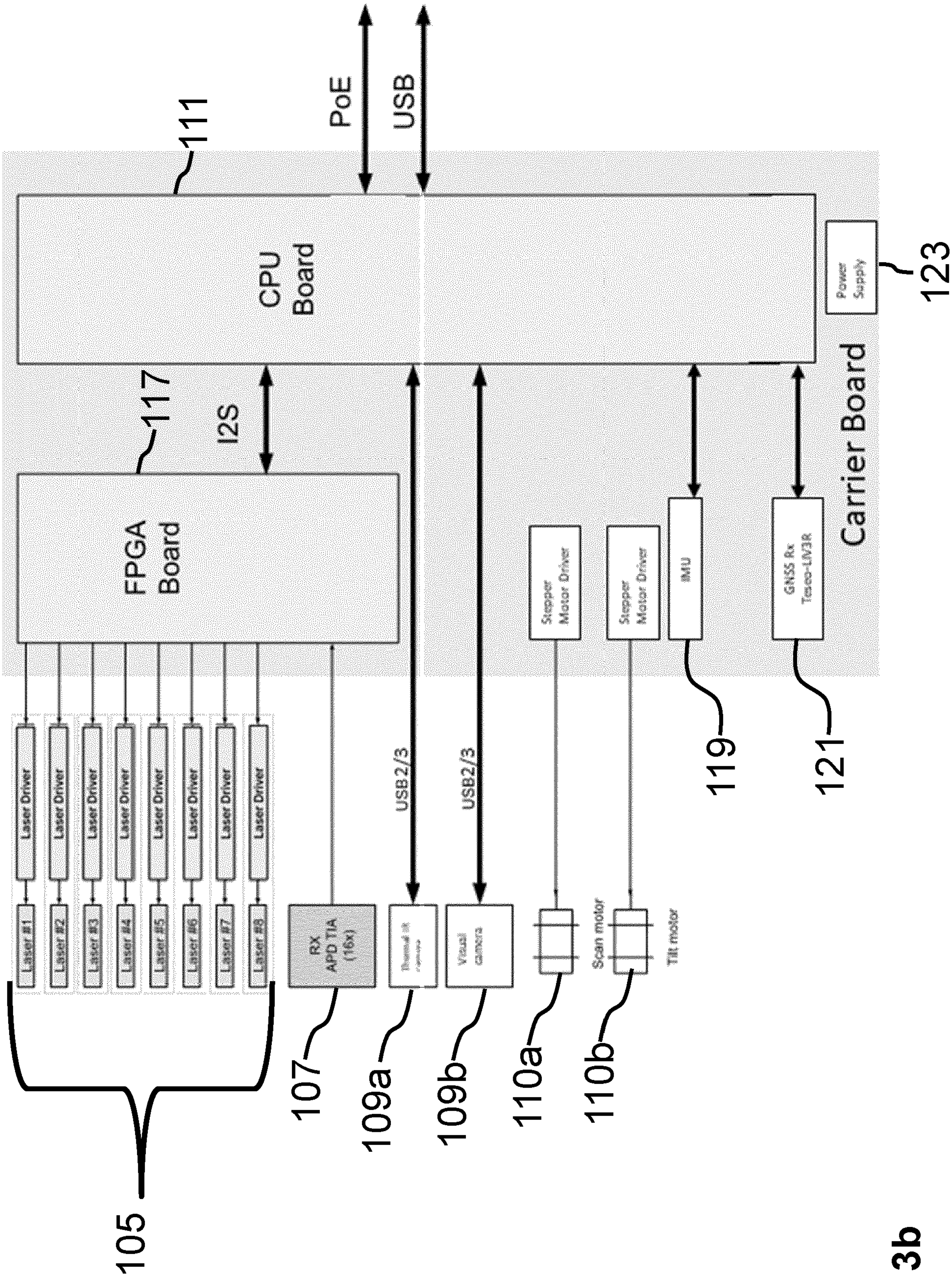
111
PoE
USB
CPU Board
Power Supply
123
117
I2S
FPGA Board
Carrier Board
Stepper Motor Driver
Stepper Motor Driver
IMU
GNSS Rx Teseo-LIV3R
119
121
USB2/3
USB2/3
Laser Driver
Laser #1
Laser #2
Laser #3
Laser #4
Laser #5
Laser #6
Laser #7
Laser #8
RX APD TIA (16x)
Thermal IR
Visual camera
Scan motor
Tilt motor
105
107
109a
109b
110a
110b

Fig. 3b

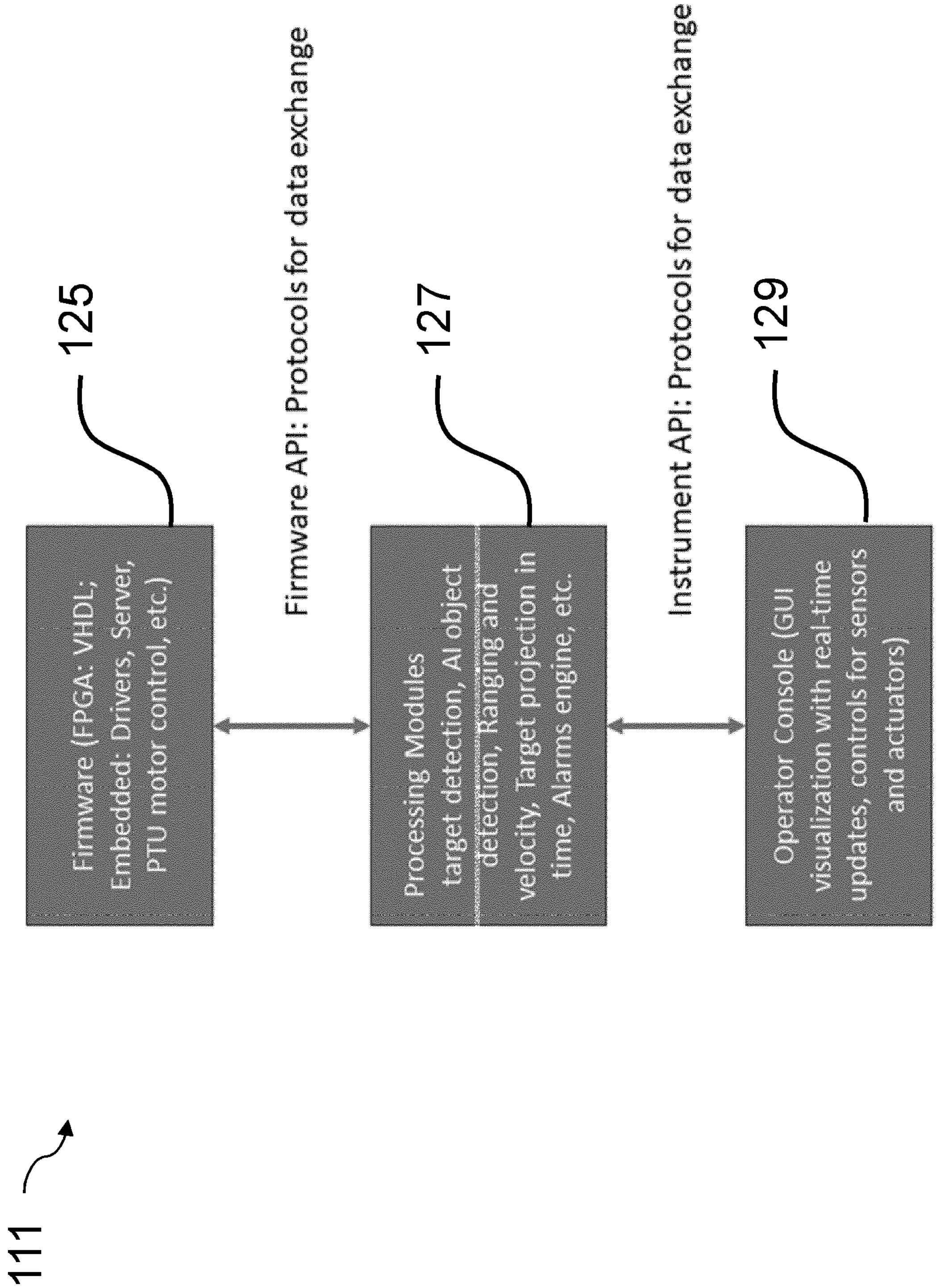
111
125
Firmware (FPGA: VHDL; Embedded: Drivers, Server, PTU motor control, etc.)
Firmware API: Protocols for data exchange
127
Processing Modules target detection, AI object detection, Ranging and velocity, Target projection in time, Alarms engine, etc.
Instrument API: Protocols for data exchange
129
Operator Console (GUI visualization with real-time updates, controls for sensors and actuators)

Fig. 4

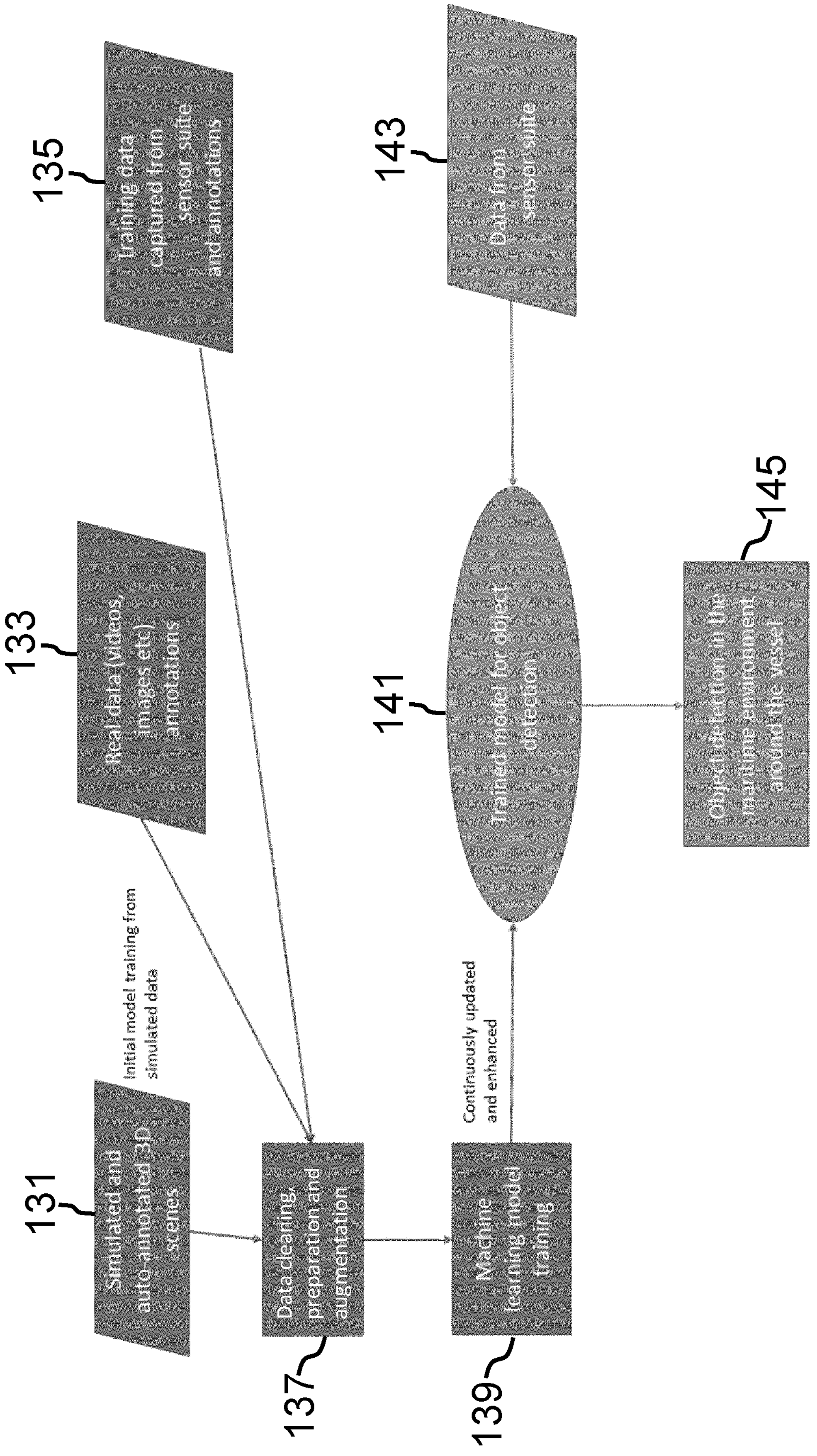

131
Simulated and auto-annotated 3D scenes
Initial model training from simulated data
133
Real data (videos, images etc) annotations
135
Training data captured from sensor suite and annotations
137
Data cleaning, preparation and augmentation
139
Machine learning model training
Continuously updated and enhanced
141
Trained model for object detection
143
Data from sensor suite
145
Object detection in the maritime environment around the vessel


Fig. 5

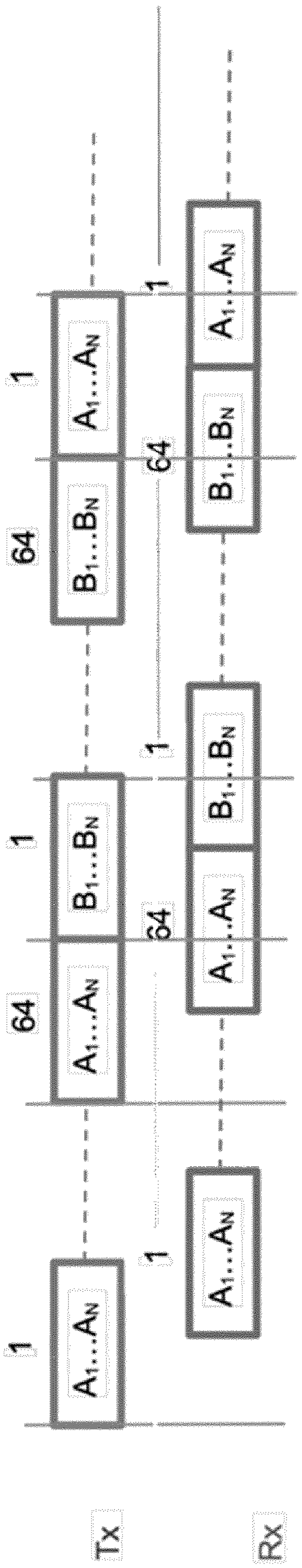


Fig. 6

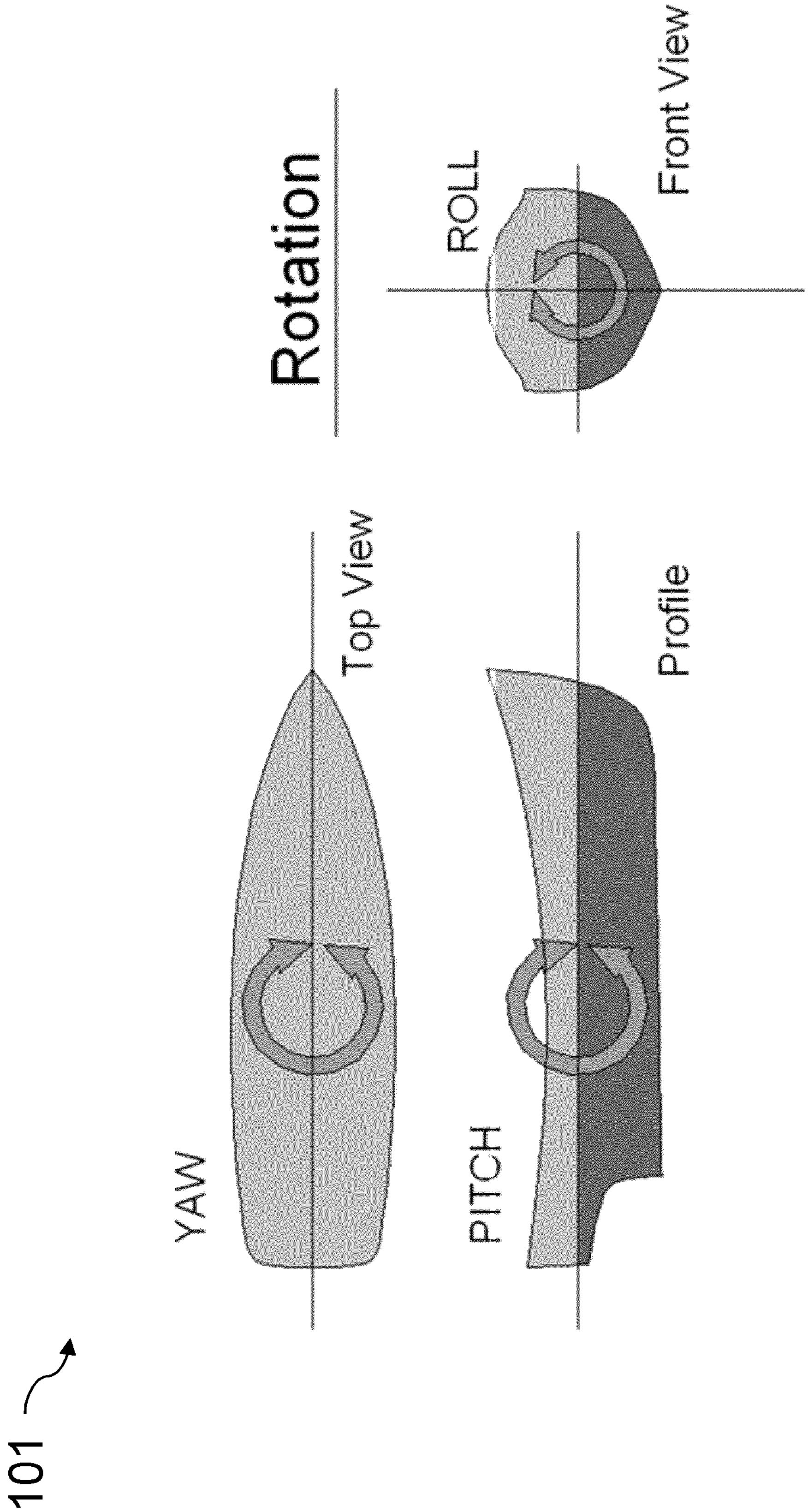


Fig. 7a

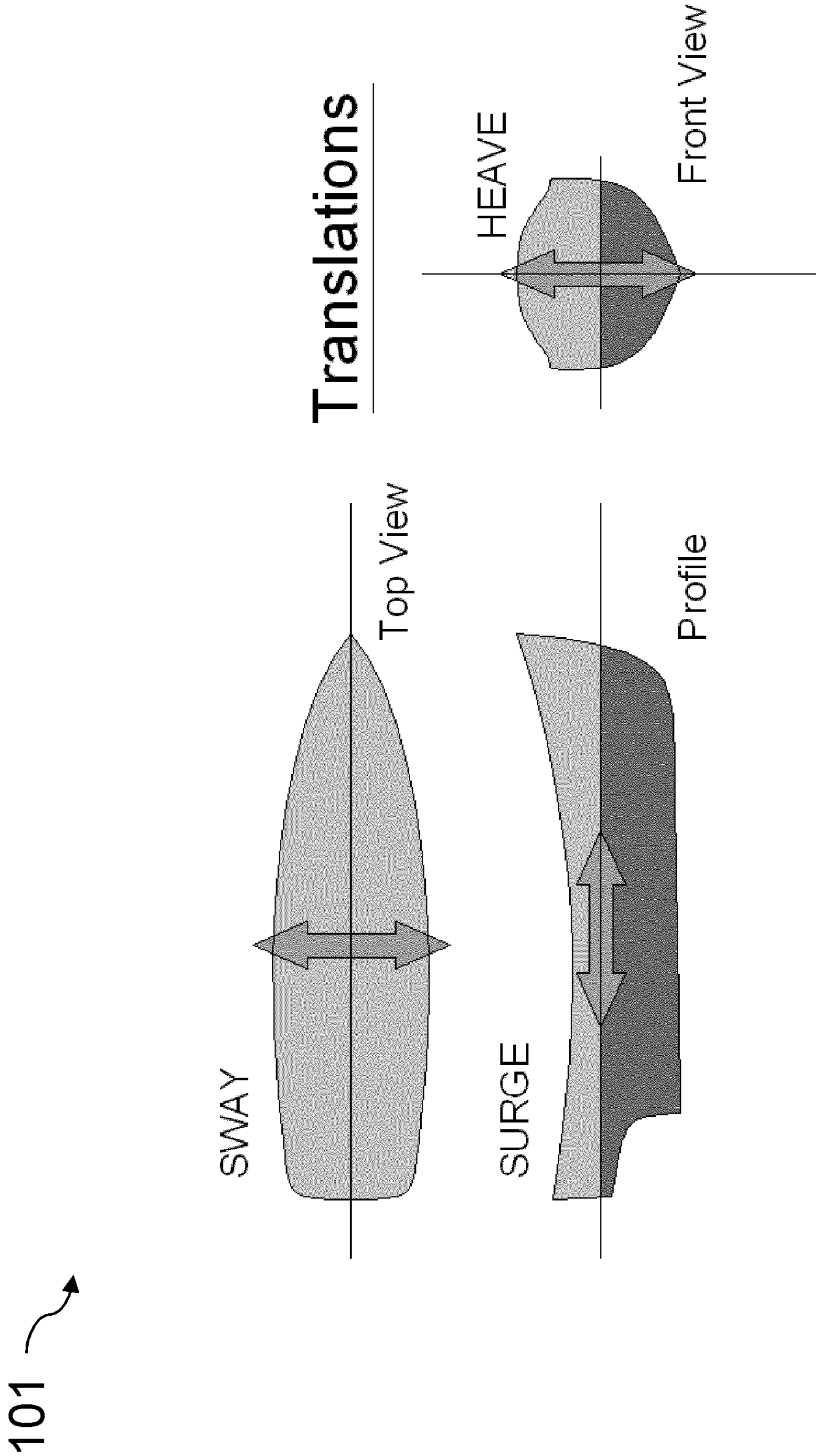
101
Translations
HEAVE
Front View
SWAY
Top View
SURGE
Profile

Fig. 7b

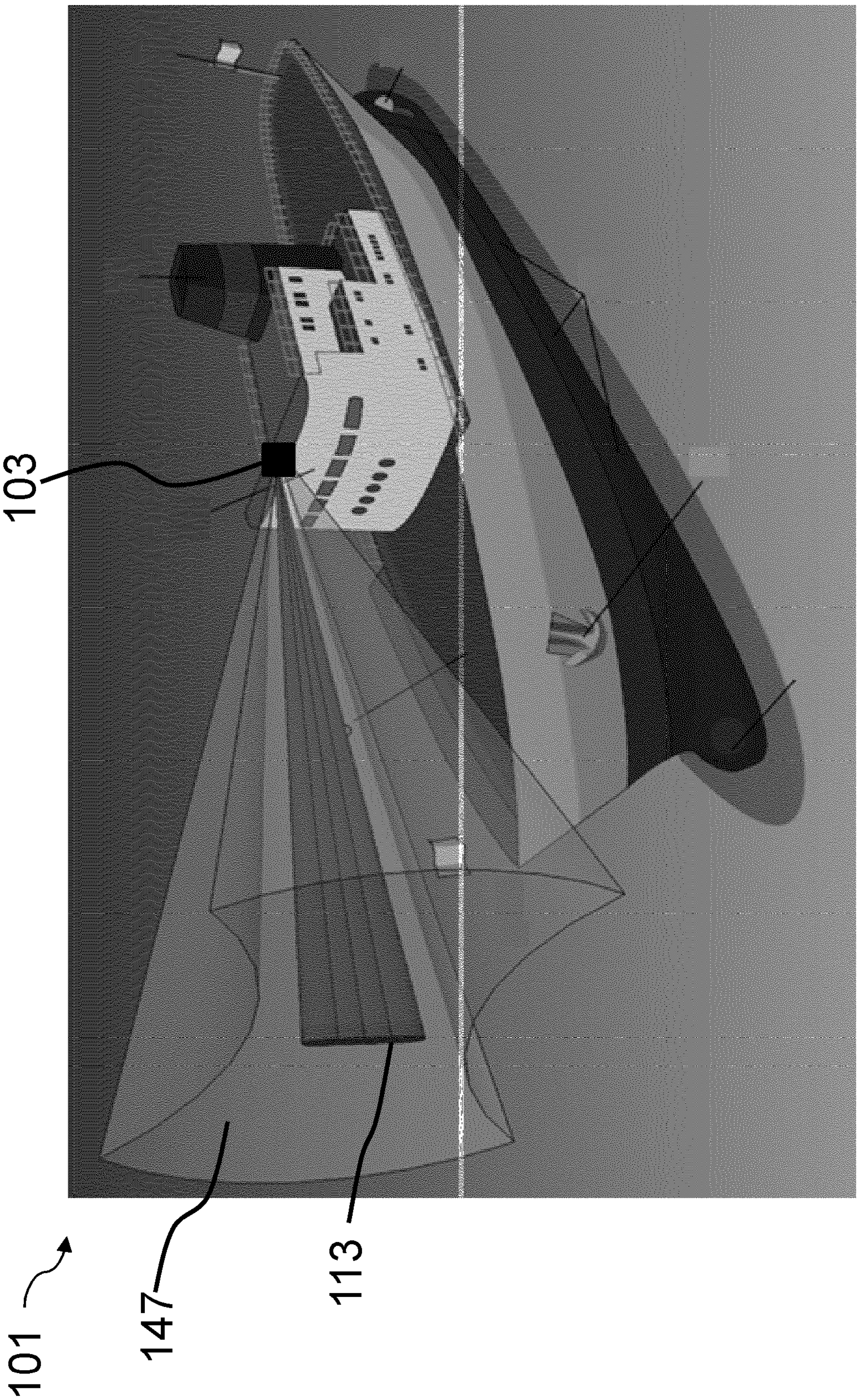


Fig. 7c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016266246 A1
- US 2018329061 A1
- WO 2021030477 A1
- US 2023068036 A1
- US 2022351523 A1
- US 2021019521 A1
- US 2023215164 A1